# EUROPEAN PATENT APPLICATION

(11) **EP 1 808 766 A2**
(43) Date of publication of application: **18.07.2007**
(21) Application number: 06026784.6
(22) Date of filing: 22.12.2006
(51) Int. Cl.: G06F 9/48, G06F 9/38

(54) **Microcomputer provided with instruction cache memory**

(30) Priority: 26.12.2005 JP 2005373206; 15.09.2006 JP 2006250994
(71) Applicant: DENSO CORPORATION, Kariya-city, Aichi-pref. 448-8661 (JP)
(72) Inventor: Nakasato, Hiroki c/o DENSO CORPORATION, Kariya-city, Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

In a microcomputer provided with an instruction cache memory, in which a plurality of programs are executed, the execution time of each of the programs is ensured not be long. After dummy execution of high-priority processing in a time zone when a CPU of the microcomputer is in the process of executing idle processing, a high-priority processing program is stored in the instruction cache memory. The time for executing the high-priority processing afterwards with normal timing can be reduced because the high-priority processing program has already been stored in the instruction cache memory, whereby the hit rate is increased.

## Description

### CROSS-REFERENCE TO RELATED APPLICATION

This application is based on and claims the benefit of priorities from earlier Japanese Patent Application No. 2005-373206 filed on December 26, 2005, and Japanese Patent Application No. 2006-250994 filed on September 15, 2006, the description of which is incorporated herein by reference.

### BACKGROUND OF THE INVENTION

### [Technical Field of the Invention]

The present invention relates to a microcomputer provided with an instruction cache memory.

### [Related Art]

In order to improve processing speed, microcomputers having a program memory for storing programs and a CPU (central processing unit) have been furnished, separately from the program memory, with an instruction cache memory, for example, as a memory for enabling high-speed writing/reading. In such a microcomputer, a program read out from the program memory by the CPU is stored in the instruction cache memory for update. The CPU, when carrying out a given program, reads out the program from the instruction cache memory if the program is stored in the instruction cache memory. However, if the program has not been stored in the cache memory, the CPU has to read out the program from the program memory. Time required for accessing the program memory is long comparing with the time required for accessing the instruction cache memory. In other words, if the probability (hit rate) for the CPU to read out a program from the instruction cache memory is high, processing speed is enhanced.

It is therefore preferable that a program of high-priority processing (hereinafter referred to as "high-priority processing program"), which should be executed within a predetermined time without fail, for example, is always stored in the instruction cache memory. This is because this enhances the processing speed as mentioned above, and thus execution time of the program (time from the start to the end of the execution) is expected to be reduced. One approach that has been taken is to fixedly locate the high-priority processing programs in the instruction cache memory in advance as disclosed in Japanese Patent Application Laid-Open Nos. 4-239944 and 9-034792.

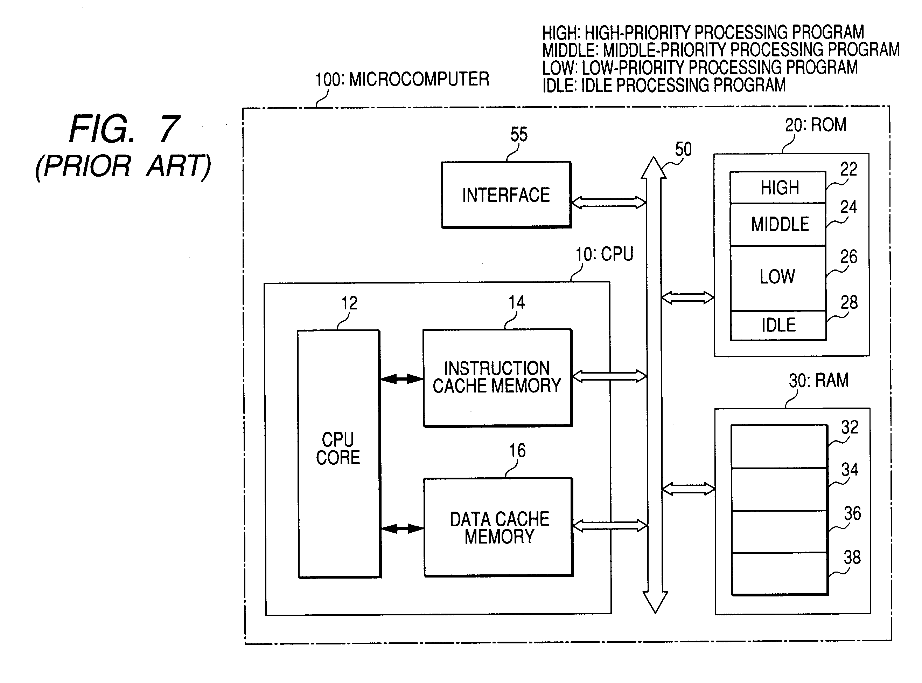

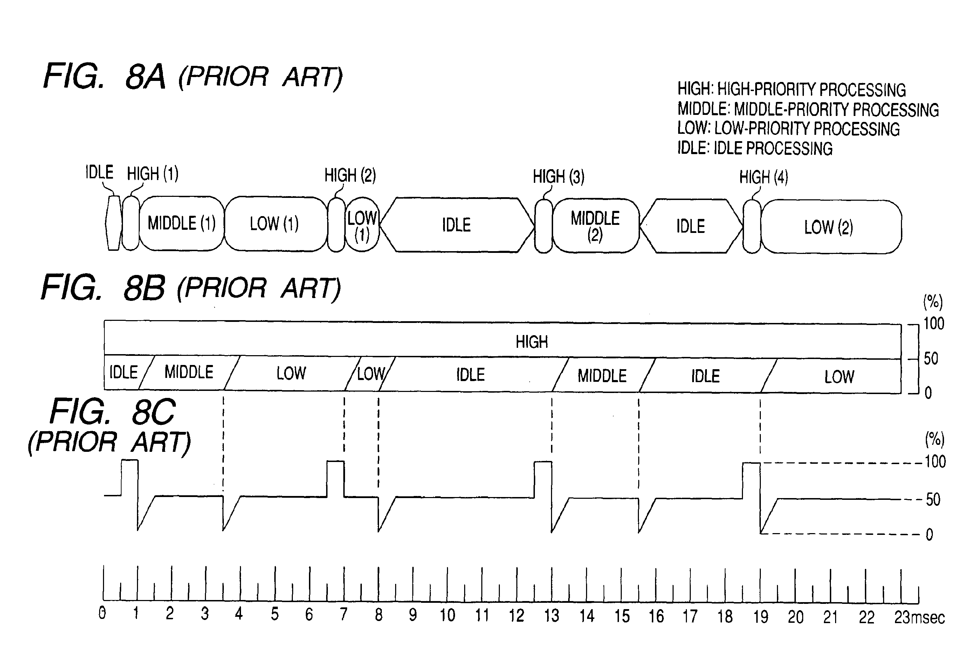

One example of such a microcomputer in which high-priority processing programs are fixedly stored in the instruction cache memory will be explained with reference to Figs. 7 and 8.

Fig. 7 is a block diagram showing one example of such a microcomputer 100. The microcomputer 100 includes a CPU 10 for executing various programs, a ROM 20 in which the programs executed by the CPU 10 is stored in advance, a RAM 30 for temporarily storing results of calculations, for example, carried out by the CPU 10, an interface 55 connected to external machinery, not shown, and an internal bus 50 for interconnection of the foregoings.

In this example, the CPU 10 is adapted to carry out four processes. They are high-priority processing having the highest priority, a middle-priority processing having secondly high priority, a low-priority processing having the lowest priority, and idle processing. The programs for executing these processes are stored in the ROM 20. A storage region 22 of the ROM 22 stores high-priority processing programs for executing the high-priority processing, a storage region 24 stores middle-priority processing programs for executing the middle-priority processing, a storage region 26 stores low-priority processing programs for executing the low-priority processing, and a storage region 28 stores idle processing programs for executing the idle processing.

Particularly, the CPU 10 includes a CPU core 12 for reading out the above programs and executing various operations according to the programs, an instruction cache memory 14 connected to the internal bus 50 and storing the programs read out from the ROM 20 by the CPU core 12 for update, and a data cache memory 16 connected to the internal bus 50 and temporarily storing the results of calculations, for example, performed by the CPU core 12.

In executing a predetermined program, the CPU core 12 attempts to access the instruction cache memory 14 first to fetch the program. If the program is present in the instruction cache memory 14, the CPU core 12 reads out the program from the instruction cache memory 14, and if not, the CPU core 12 makes an access to the ROM 20 to read out the program. The results of calculations, for example, performed by the CPU core 12 are stored in the data cache memory 16 mentioned above, and at the same time, are temporarily stored in storage regions (storage regions 32 to 38) provided in the RAM 30.

Fig. 8A is a timing diagram indicating execution timing for the individual processings provided above. Fig. 8B is a diagram showing the occupancy in the instruction cache memory 14. Fig. 8C is a diagram showing the probability (hit rage) for the CPU core 12 to read out programs from the instruction cache memory 14.

In this example, the high-priority processing programs are all fixedly stored in the instruction cache memory 14 in advance. As shown in Fig. 8B, 50% capacity of the instruction cache memory 14 is occupied by the high-priority processing program. The remaining 50% is left open so that the programs can be rewritten.

As shown in Fig. 8A, the high-priority processing (first time) is carried out with 0.5 msec timing. From this point onward, it is so arranged that the high-priority processing is carried out every 6 msec. After finishing the first high-priority processing (with 1.0 msec timing), a first middle-priority processing is carried out, which, from this point onward, is carried out every 12 msec. After finishing the first middle-priority processing (with 3.5 msec timing), a first low-priority processing is carried out, which, from this point onward, is carried out every 16 msec. The idle processing is carried out in a time zone when none of the high-priority processing, the middle-priority processing and the low-priority processing is carried out.

When the high-priority processing is carried out in this example, the hit rate is 100% because the high-priority processing programs are fixedly stored in the instruction cache memory 14, and thus the processing speed is enhanced. The high-priority processing is completed at 1.0 msec, which means that the high-priority processing program is executed within 0.5 msec. On the other hand, in carrying out the middle-priority processing or the low-priority processing, half a region of the instruction cache memory 14 is to be used. In this example, therefore, the hit rate has only been improved up to 50% at the maximum. As to the middle-priority processing, 2.5 msec is taken as execution time, and as to the low-priority processing, 4.0 msec is taken as execution time.

In the microcomputer 100 described above, while the execution time for the high-priority processing can be shortened, the middle-priority processing time is considered to need a longer execution time and low-priority processing because only a portion of the instruction cache memory 14 can be used.

Alternatively, where the high-priority processing programs are not fixedly stored in the instruction cache memory 14, the whole region of the instruction cache memory 14 is left open, so that the execution time for the middle-priority processing or the low-priority processing cannot be long. However, as far as the high-priority processing is concerned, the execution time becomes unavoidably long. Taking long execution time for the high-priority processing is not preferable, because the high-priority processing is required to be carried out within a predetermined time without fail.

### SUMMARY OF THE INVENTION

The present invention has been made in light of the problem described above, and has as its object to provide a microcomputer for executing a plurality of programs, which does not need a long time for executing the various programs.

For solving the above problem, as one aspect of the present invention, the microcomputer comprises a program memory for storing a plurality of programs, an instruction cache memory for storing for update the programs read out from the program memory, a CPU and dummy execution control means.

As to at least one program among the plurality of programs, the dummy execution control means is ensured to allow the CPU to execute the program with the timing that takes place earlier than the normal timing with which the CPU reads out and executes the program.

In this case, the program executed with the timing earlier than the normal timing is stored for update in the instruction cache memory with the execution of the program. Therefore, the CPU, when executing the program with the normal timing, can read the program from the instruction cache memory. Thus, the time for executing the program with the normal timing can be reduced.

In the microcomputer of the present invention, the whole region in the instruction cache memory is left open so as to be rewritable. Accordingly, in case a program, when it is executed, allows loop processing of a plurality of patterns to be carried out with the program, for example, more programs for the loop processing can be stored in advance in the instruction cache memory. This can prevent the hit rate from being deteriorated and the program execution time from becoming long. Also in case a program is once executed and the rest of the program is executed continuously, since more programs constituting the program are stored as mentioned above, the hit rate is not deteriorated and the program execution time cannot be elongated.

The programs executed by the CPU with the timing earlier than the normal timing may be singular or may be plural, or, needless to say, may be all.

It is preferred that, in the present microcomputer, the plurality of programs are for controlling an object to be controlled. The CPU is ensured to control the object to be controlled by executing the plurality of programs.

The dummy execution control means is so arranged as to have the CPU executed a program in a time zone when the CPU does not control the object to be controlled. The time zone when the CPU does not control the object to be controlled may correspond to a time zone when the CPU does not execute a program. Even when the CPU is in execution of a program in the time zone, if the program has no relation to the object to be controlled (e.g., a program waiting for command), the time zone may be considered to be the one when the CPU does not control the object to be controlled.

The fact that the dummy execution control means allows the CPU to execute a program in such a time zone, may achieve the effects as mentioned above without particularly increasing loads on the CPU.

In a microcomputer of this type, in case the results of calculations obtained with the timing different from the normal timing are used in another processing, there is a possibility that the processing may not be appropriately carried out, or desired results may not be obtained.

In light of this problem, the microcomputer according to another aspect includes a true value storage portion in which results of the calculations obtained by the CPU's execution of a program with the normal timing are stored, and storage control means which allows the results of the calculations to be stored in a specified storage portion other than the true value storage portion, the results of the calculations being obtained by the procedure in which the dummy execution control means has allowed the CPU to execute a program with the timing earlier than the normal timing.

In particular, according to the microcomputer on the third mode, the results of calculations obtained by the CPU's execution of a program with the normal timing are stored in the true value storage portion which serves as a normal storage portion. On the other hand, the results of calculations obtained by the CPU's execution of a program at the timing earlier than the normal timing (hereinafter referred to as "dummy calculation results") are not stored in the true value storage portion. By providing an arrangement in which only the calculation results stored in the true value portion are used for another processing, erroneous use of the dummy calculation results can be prevented.

The storage portion (transfer destination) of the calculation results may be determined by parameters. In the microcomputer of the present invention, the storage control means is provided with parameters for designating a transfer destination of the calculation results. The calculation results are transferred according to the parameters.

The specified storage portion may be the ROM. In this case, if the storage control means attempts to write the dummy calculation results into the ROM, since writing to ROM is originally disabled, the writing is disregarded. Accordingly, use of the dummy calculation results in another processing can be surely prevented. A storage region for storing the dummy calculation results may only be virtually established, and there is no need to actually provide such a storage region, thereby saving memory resource.

As an example, the program memory of the microcomputer may be a ROM or a RAM.

As another example, the microcomputer can be loaded on a vehicle. In the program memory of the microcomputer, a program for controlling a vehicle engine is stored as a program for controlling a vehicle (hereinafter referred to as a "vehicle control program"). It is arranged such that the dummy execution control means allows the CPU to execute the engine control program with the timing earlier than the normal timing for executing the engine control program.

As another example of the microcomputer, the engine control program can be read out from the instruction cache memory with the normal timing of executing the engine control program. Thus, the execution time of the engine control program with the normal timing can be shortened.

Engine control includes, for example, fuel injection control and ignition control. Preferably, reduction in the execution time of the engine control program can prevent fuel injection or ignition from being more delayed than desired timing.

Preferably, by way of example, the microcomputer may control a transmission of a vehicle. In this case, the microcomputer is to be loaded on a vehicle. Accordingly, a program for controlling transmission is stored in the program memory as a vehicle control program.

The dummy execution control means is so arranged as to allow the CPU to execute the transmission control program with the timing earlier than the normal timing for executing the transmission control program.

The transmission control program can be read out from the instruction cache memory with the normal timing for executing the transmission control program. Thus, the execution time of the transmission control program with the normal timing can be shortened.

In controlling transmission, feedback control may sometimes be performed, in which the number of revolutions of each of an input shaft and an output shaft is calculated, for example, and the output shaft rotational frequency is rendered to be a desired number of revolutions. In this case, in the microcomputer, the execution time of the transmission control program can be reduced to enhance the accuracy of the feedback control.

Still preferably, the microcomputer may include an operating system (e.g., real-time operation system). The vehicle control program is an application program whose execution is controlled by the operating system. An arrangement is made such that, prior to executing the vehicle control program, a processing program to be ready for executing the vehicle control program (hereinafter referred to as a "preparatory program") is executed. It should be noted that the preparatory program is stored in the program memory.

The dummy execution control means is so arranged as to allow the CPU to execute the preparatory program with the timing earlier than the normal timing for executing the preparatory program.

In this microcomputer, the preparatory program can be read out from the instruction cache memory with the normal timing for executing the preparatory program. Thus, the execution time of the preparatory program with the normal timing can be shortened. Thus, transfer to the execution of the vehicle control program can be promptly carried out, whereby the time up to the end of the execution of the vehicle control program can be shortened.

The microcomputer may require the engine control program to be executed with a short cycle as the engine speed becomes high, for example. Therefore, a time zone when an engine control program is not executed (hereinafter referred to an "idle time zone") is unavoidably reduced. In this case, the following arrangement can be provided.

That is, the microcomputer is provided with a plurality of engine control programs. The dummy execution control means determines whether the engine speed is high or low and changes, among the plurality of the engine control programs, a program to be executed by the CPU with the timing earlier than the normal timing, based on the results of the determination.

In this microcomputer, where the engine speed is high, a higher-priority engine control program can be executed with the timing earlier than the normal timing. As the engine speed turns to a middle or low level, types of engine control programs can be increased, which are to be executed with the timing earlier than the normal timing. With this arrangement, where there is a sufficient idle time zone, more number of engine control programs can be stored in advance in the instruction cache memory. Where the idle time zone is insufficient, higher-priority engine control programs can be advantageously stored in the instruction cache memory in advance.

The transmission mentioned above changes speed by changing gear. For changing gear, control for the change has to be carried out. In the microcomputer, the arrangement may preferably be made as follows.

By way of example, in the microcomputer, the dummy execution control means is so arranged as to change, among the plurality of transmission control programs, a program to be executed by the CPU with the timing earlier than the normal timing, according to the state of the gear, i.e. in change / not in change.

According to this microcomputer, where the gear is in change in particular, the transmission control program for controlling the change of gear can be stored in the instruction cache memory in advance. In this way, the gear change control can be advantageously performed at higher speed when the gear is being changed. On the other hand, when the tear is not in change, the transmission control program for controlling gear change may not necessarily be stored in the instruction cache memory in advance, whereby efficiency can be attained.

### BRIEF DESCRIPTION OF THE DRAWINGS

In the accompanying drawings:
Fig. 1 is a block diagram showing a configuration of a microcomputer according to a first embodiment of the present invention;
Fig. 2 is an explanatory view for explaining a configuration of an instruction cache memory and a RAM;
Figs. 3A to 3C are timing diagrams showing an operation and effects of the first embodiment of the present invention;
Fig. 4 is a flow diagram showing administrative processing performed by a CPU of the microcomputer according to the first embodiment of the present invention;
Figs. 5A to 5D are flow diagrams showing processings performed by a CPU of the microcomputer according to the first embodiment of the present invention;
Fig. 6 is an explanatory view showing a portion of a high-priority processing program according to the first embodiment of the present invention;
Fig. 7 is a block diagram showing a configuration of a microcomputer according to conventional art;
Figs. 8A to 8C are timing diagrams explaining problems of the conventional art;
Fig. 9 is a block diagram showing an engine control system according to a second embodiment of the present invention;
Fig. 10 is an explanatory view explaining engine control according to the second embodiment of the present invention;
Figs. 11A to 11C are flow diagrams showing a high-priority processing executed by a CPU in a computer according to the second embodiment of the present invention;
Fig. 12 is a flow diagram showing contents of the high-priority processing performed by the CPU in the computer according to the second embodiment of the present invention;
Fig. 13 is a flow diagram showing administrative processing performed by the CPU in the computer according to the second embodiment of the present invention;
Fig. 14 is an explanatory view explaining the high-priority processing and dummy processing performed by the CPU in the computer according to the second embodiment of the present invention;
Fig. 15 is a timing chart showing an operation and effects of the second embodiment;
Fig. 16 is an explanatory view showing the operation and effects of the second embodiment;
Fig. 17 is a timing diagram showing engine control according to a modification of the second embodiment of the present invention;
Fig. 18 is a flow diagram showing dummy processing performed by a CPU of a microcomputer according to the modification of the second embodiment of the present invention;
Figs. 19A and 19B are block diagrams showing automatic transmission control according to a third embodiment of the present invention;
Fig. 20 is an explanatory view explaining the automatic transmission control according to the third embodiment of the present invention;
Figs. 21A to 21C are flow diagrams showing high-priority processing performed by a CPU in a microcomputer according to the third embodiment of the present invention;
Fig. 22 is an explanatory view explaining the contents of the high-priority processing performed by the CPU in the microcomputer according to the third embodiment of the present invention;
Fig. 23 is an explanatory view explaining the high-priority processing and dummy processing performed by the CPU in the computer according to the third embodiment of the present invention;
Fig. 24 is a timing diagram showing an operation and effects of the third embodiment;
Fig. 25 is an explanatory view showing the operation and effects of the third embodiment;
Fig. 26A is a timing chart showing automatic transmission control according to a modification of the third embodiment of the present invention;
Fig. 26B is a flow diagram showing dummy processing performed by a CPU in a microcomputer according to the modification of third embodiment of the present invention;
Fig. 27 is an explanatory view explaining control by a real-time OS equipped in a microcomputer according to a fourth embodiment of the present invention;
Fig. 28 is an explanatory view explaining high-priority processing and dummy processing performed by the CPU in the microcomputer according to the fourth embodiment of the present invention;
Fig. 29 is a timing diagram showing an operation and effects of the fourth embodiment of the present invention; and
Fig. 30 is an explanatory view explaining the operation and effects of the fourth embodiment of the present invention.

### DETAILED DESCRIPTION OF PREFERRED EMBODIMENTS

Hereinafter are described some embodiments of the present invention with reference to the accompanying drawings. Throughout the embodiments as well as the prior art described above, the identical or similar components or processes are given the same references for the sake of simplification or omission of explanation.

### [First Embodiment]

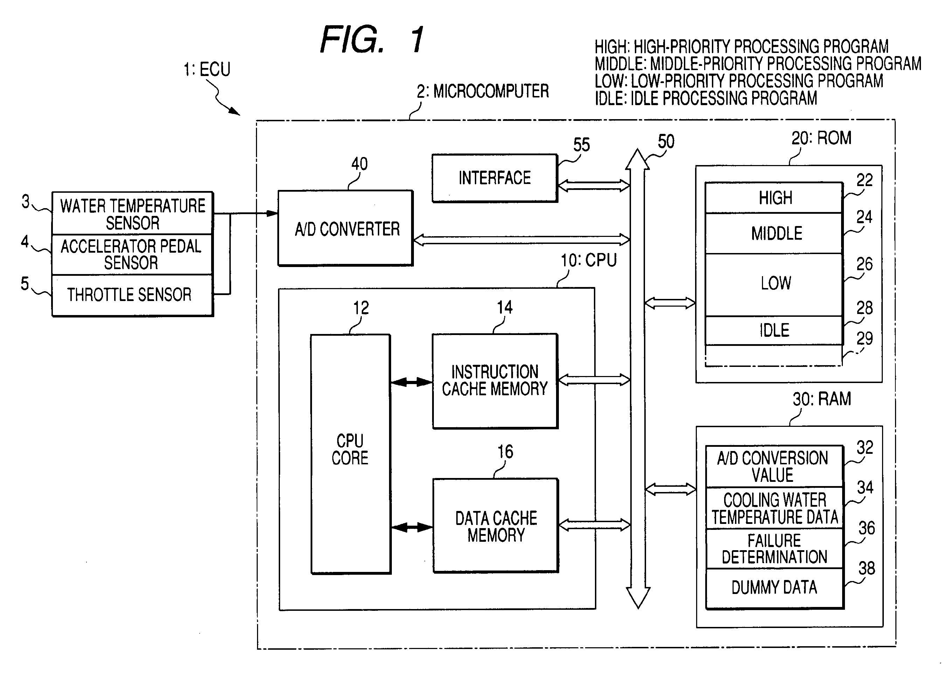

Fig. 1 is a block diagram showing a configuration of a microcomputer 2 to which the present invention is applied. It should be appreciated that the microcomputer 2 is equipped in an electronic control unit (hereinafter referred to as an "ECU") 1 which is loaded on a vehicle to control an engine of the vehicle.

The microcomputer 2 of the present embodiment includes an A/D converter 40 in addition to the microcomputer 100 described above and shown in Fig. 7. The A/D converter 40 is connected to the internal bus 50, and signals are inputted thereto from a water temperature sensor 3 for detecting the temperature of cooling water of an engine, an accelerator pedal sensor 4 for detecting an accelerator opening, and a throttle sensor 5 for detecting a throttle opening. The A/D converter 40 performs A/D conversion of the signals inputted from the above sensors based on a command from the CPU 10.

The ROM 20 of the microcomputer 2 is provided with a storage region 29, which will be described later.

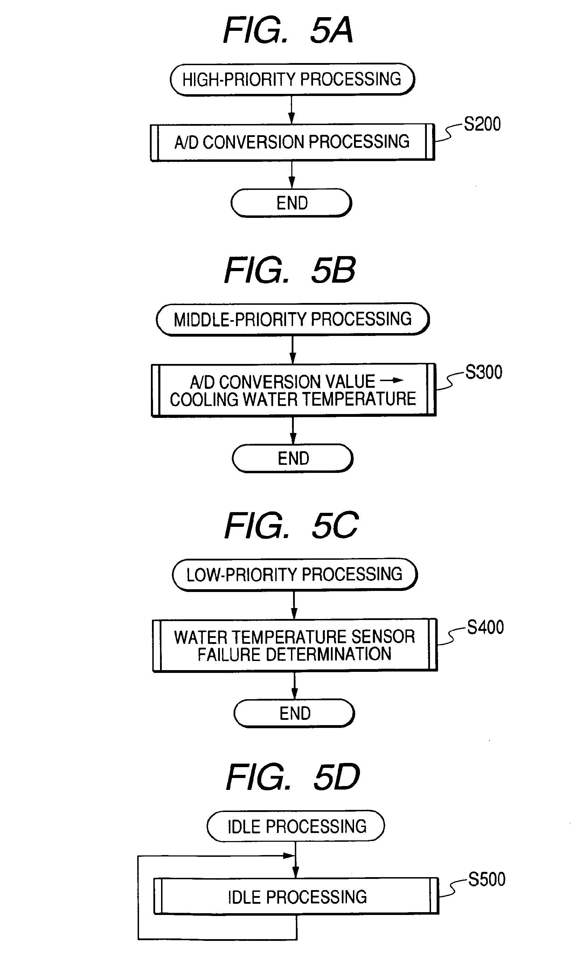

Similar to the CPU 10 in Fig. 7, the CPU 10 (actually, the CPU core 12) performs four processings (see Fig. 5) whose priorities are different from each other. These processings are the high-priority processing, the middle-priority processing, the low-priority processing and the idle processing.

The high-priority processing of Fig. 5A is performed every 6 msec. With the start timing, the following processing is performed at step S200.

First, A/D conversion is performed by the A/D converter 40 in response to the signals from the water temperature sensor 3, the accelerator pedal sensor 4 and the throttle sensor 5. The values obtained from the A/D conversion (hereinafter referred to as "A/D conversion values") are stored in the storage region 32 in the RAM 30. Then, based on the A/D conversion values for the signals from the accelerator pedal sensor 4 and the throttle sensor 5, a malfunction determination processing of an electronic throttle, not shown, equipped in the throttle sensor 5 is performed. In particular, a difference between an opening of the accelerator pedal and an opening of the electronic throttle is calculated, for example, and if the difference does not fall within an allowable range, a determination is made that malfunction has occurred in the electronic throttle. Since the opening of the electronic throttle or the opening of the accelerator pedal is important information for showing a driving state of the vehicle, the above high-priority processing is required to be performed with a predetermined timing without being interrupted.

The middle-priority processing of Fig. 5B is performed every 12 msec. With the start timing, the following processing is performed at step S300. At step S300, the temperature of the cooling water of the engine is calculated based on the A/D conversion values for the signals from the water temperature sensor 3 stored in the storage region 32. The calculated data indicative of the cooling water temperature is stored in the storage region 34 in the RAM 30.

The low-priority processing of Fig. 5C is performed every 16 msec. With the start timing, the following processing is performed at step S400. At step S400, a determination on the failure of the water temperature sensor 3 is made based on the data indicating the cooling water temperature stored in the storage region 34, and the result of the determination is stored in the storage region 36 in the RAM 30. Regarding the failure determination, in case a system for detecting the cooling water temperature is provided separately from the water temperature sensor 3, for example, comparison is made between the cooling water temperature obtained by the system and the cooling water temperature calculated based on the signals from the water temperature sensor 3. If there is a large difference between both of the temperatures, it may be determined, for example, that the water temperature sensor 3 is in failure. Where the water temperature sensor 3 is determined to be in failure, the information is stored in a non-volatile memory (e.g., EEPROM), not shown.

The idle processing of Fig. 5D is a processing which is not controlled in particular, and is performed when the above high-priority processing, the middle-priority processing or the low-priority processing is not performed. While the idle processing is performed at step S500, the CPU core 12 is in a so-called standby state. In Fig. 1, a dummy A/D conversion value that will be described later is stored in the storage region 38 in the RAM 30.

When the above high-priority processing, the middle-priority processing, the low-priority processing and the idle processing are performed, the CPU core 12 reads out the programs for the individual processings. In this case, the instruction cache memory 14 is accessed first for an attempt to perform reading from the instruction cache memory 14. If the targeted program is present in the instruction cache memory 14, the program is read out therefrom. If the targeted program is not present in the instruction cache memory 14, an access is made to the ROM 20 to read the program therefrom. In case the program is read from the ROM 20, the read-out program is stored for update in the instruction cache memory 14. The CPU core 12 can make an access to the instruction cache memory 14 at higher speed than to the ROM 20. Accordingly, if the program can be read from the instruction cache memory 14 when the CPU core 12 performs the above processes, it is expected that the process time can be reduced.

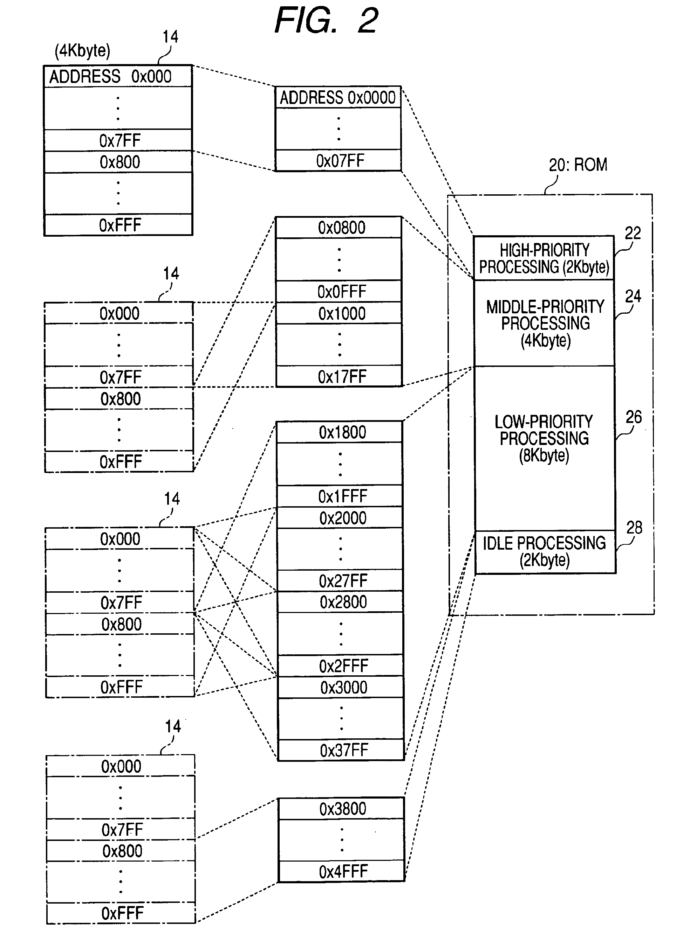

Referring now to Fig. 2, an explanation is given as to how the programs stored in the storage regions 22 to 28 in the ROM 20 are stored in the instruction cache memory 14.

Fig. 2 is a block diagram showing the ROM 20 and the instruction cache memory 14. In the present embodiment, the instruction cache memory 14 is made up of blocks (regions for storing programs) to which addresses 0x000 to 0×FFF are allocated. Storage capacity of the instruction cache memory 14 is 4 Kbytes (kilobytes). It should be noted that in Fig. 2 the addresses are expressed by hexadecimal numerals.

As described above, the high-priority processing program is stored in the storage region 22 in the ROM 20. This high-priority processing program is stored in blocks in the ROM 20, which are allocated with addresses 0x0000 to 0×07FF. Data amount of the high-priority processing program is 2 Kbytes. Data amount of the middle-priority processing program is 4 Kbytes, the data being stored in blocks (storage region 24) allocated with addresses 0x0800 to Ox17FF. Data amount of the low-priority processing program is 8 Kbytes, the data being stored in blocks (storage region 26) allocated with addresses 0x1800 to 0×37FF Further, data amount of the idle processing program is 2 Kbytes, the data being stored in blocks (storage region 28) allocated with addresses 0x3800 to 0x4FFF.

The CPU core 12 reads out pieces of program from the ROM 20 by a fixed amount (e.g., 32 bytes) each time. The pieces of program thus read out are then stored for update in the instruction cache memory 14. In this case, the pieces of program read out from the ROM 20 are sequentially stored for update in the instruction cache memory 14, with the block addresses of the instruction cache memory 14 being linked to those of the ROM 20, respectively.

Specifically, linking is made for low-order 12 bits (last three digits) of an address. For example, the high-priority processing program stored in the blocks addressed 0x0000 to 0x07FF in the ROM 20 is stored in the blocks addressed 0×000 to 0x7FF in the instruction cache memory 14. Among the pieces of middle-priority processing program stored in the blocks addressed 0x0800 to 0x17FF in the ROM 20, the pieces of program corresponding to the blocks addressed 0x0800 to 0x0FFF in the ROM 20 are stored in the blocks addressed 0x800 to 0xFFF in the instruction cache memory 14, and the pieces of program corresponding to the blocks addressed 0x1000 to 0x17FF in the ROM 20 are stored in the blocks addressed 0x000 to 0x7F in the instruction cache memory 14.

The same is applicable to the low-priority processing program and the idle processing program. As to the low-priority processing program, the pieces of program corresponding to the blocks addressed 0×1800 to 0×1FFF and 0×2800 to 0×2FFF in the ROM 20 are stored in the blocks addressed 0×800 to 0×FFF in the instruction cache memory 14. Further, the pieces of programs corresponding to the blocks addressed 0×2000 to 0×27FF and 0×3000 to 0×37FF in the ROM 20 are stored in the blocks addressed 0×000 to 0×7FF in the instruction cache memory 14. The pieces of idle processing program stored in the blocks addressed 0×3800 to 0×4FFF in the ROM 20 are stored in the blocks addressed 0×800 to 0×FFF in the instruction cache memory 14.

In the microcomputer 2 of the present embodiment, dummy execution is carried out for the high-priority processing with the timing earlier than the normal timing for performing the high-priority processing, so that the high-priority processing program has been stored in the instruction cache memory 14 by the normal timing. The particulars are explained below.

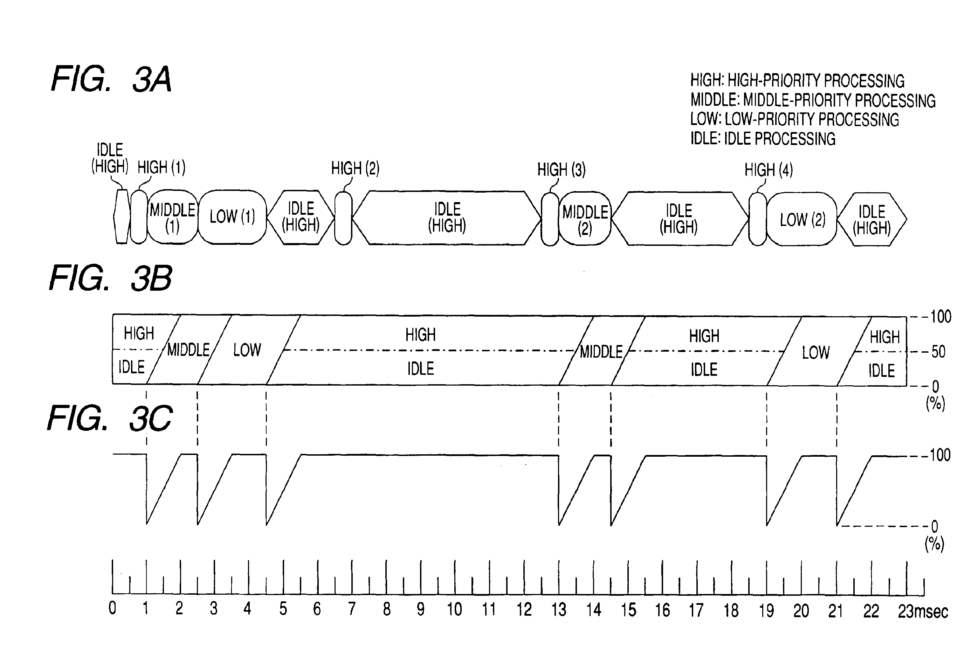

Fig. 3A is a timing diagram showing the execution timing of the above Data amounts. Fig. 3B is a diagram showing the occupancy in the instruction cache memory 14, and Fig. 3C is a diagram schematically showing the probability (hit rate) for the CPU core 12 to read out a program from the instruction cache memory 14.

As shown in Fig. 3A, the idle processing is performed with the timing "0" msec in this example. In the microcomputer 2 of the present embodiment, in particular, dummy execution of the high-priority processing is carried out during the execution of the idle processing separate from the high-priority processing with the normal timing (the first high-priority processing of the start time of 0.5 msec). In the following description, the high-priority processing of dummy execution is referred to as "dummy high-priority processing".

Details of the dummy high-priority processing are the same as those of the normal high-priority processing. However, although the malfunction determination of the electronic throttle is made in the normal high-priority processing as described above, such a malfunction determination processing may not be performed in the dummy high-priority processing. This may suppress loads imposed on the CPU core 12.

When the dummy high-priority processing is performed, the high-priority processing program is resultantly stored in the instruction cache memory 14. As shown in Fig. 3B, 50% of the instruction cache memory 14 is occupied by the idle processing program, and the remaining 50% is occupied by the high-priority processing program. This is because the storage capacity of the instruction cache memory 14 is 4 Kbytes while the amounts of data of the high-priority processing program and the idle processing program are 2 Kbytes each, as described above.

With the timing 0.5 msec, the normal high-priority processing (first time) is performed. The first start timing of the high-priority processing is set in advance, and the second and the subsequent processings are each performed every 6 msec. Since the high-priority processing program is entirely stored in the instruction cache memory 14 by the time of performing the first high-priority processing, the hit rate in performing the first high-priority processing results in 100%. In this example, the first high-priority processing ends at 1.0 msec. In other words, the execution time of the high-priority processing program (time from the start to the end of the execution) is 0.5 msec.

A first middle-priority processing is performed after completing the first high-priority processing. The second and the subsequent middle-priority processings are performed every 12 msec as mentioned above. When performing the first middle-priority processing, the hit rate is small because a middle-priority processing program is yet to be stored in the instruction cache memory 14. The hit rate gradually increases as the CPU core 12 reads out pieces of the middle-priority processing program from the ROM 20 and as the pieces of the middle-priority processing program are stored in the instruction cache memory 14.

Since the data amount of the middle-priority processing program is 4 Kbytes as mentioned above, the entire middle-priority processing program can be stored in the instruction cache memory 14. In this example, the middle-priority processing ends at 2.5 msec. That is, the execution time of the middle-priority processing program is 1.5 msec.

A first low-priority processing is started when the first middle-priority processing is completed. The second and the subsequent low-priority processings are performed every 16 msec as mentioned above. When performing the first low-priority processing, the hit rate is small as in the middle-priority processing, but gradually increases as the CPU core 12 reads out pieces of the low-priority processing program from the ROM 20 and as the pieces of the low-priority processing program are stored in the instruction cache memory 14.

As the storage capacity of the instruction cache memory 14 is 4 Kbytes while the data amount of the low-priority processing program is 8 Kbytes, the low-priority processing program cannot entirely be stored in the instruction cache memory 14. However, frequently used pieces of program among the pieces of the low-priority processing program, for example, may be stored more in the instruction cache memory 14. It is expected that this may increase the hit rate. In this example, the low-priority processing ends at 4.5 msec. That is, the execution time of the low-priority processing program is 2.0 msec.

After finishing the first low-priority processing, the idle processing is performed until the timing for the high-priority processing, the middle-priority processing or the low-priority processing comes. As described above, while the idle processing is performed, the dummy high-priority processing is again performed.

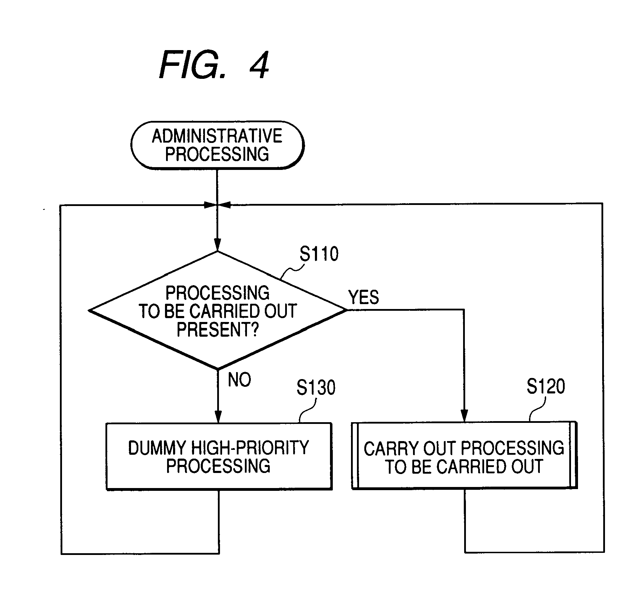

Referring now to the flow diagram shown in Fig. 4, hereinafter is described how the operation shown in Figs. 3A to 3B is realized.

The administrative processing shown in Fig. 4 is a processing performed in an operating system (hereinafter referred to as an "OS"). The program for the OS is stored in a storage region, not shown, in the ROM 20. Upon startup of the microcomputer 2, the OS program is read out by the CPU core 12 for execution. In other words, the OS is activated. With the activation of the OS, the administrative processing is started.

The high-priority processing program, the middle-priority processing program, the low-priority processing program and the idle processing program described above are all application programs, whose executions are administered according to the priority.

In the administrative processing, a determination is made first at step S110 as to whether or not there is any processing to be executed other than the one currently executed. In particular, in case the execution timing of the high-priority processing takes place during the execution of the middle-priority processing, it is determined that the high-priority processing should be performed (step S110: YES), whereby the high-priority processing is performed even when the middle-priority processing is being performed (step S120). Similarly, in case the execution timing of the middle-priority processing or the high-priority processing takes place during the execution of the low-priority processing (step S110: YES), the middle-priority processing or the high-priority processing is performed even when the low-priority processing is being performed (step S120). In case the execution timing of the high-priority processing, the middle-priority processing or the low-priority processing takes place during the execution of the idle processing (step S110: YES), the high-priority processing, the middle-priority processing or the low-priority processing is performed (step S120).

In case a determination is made that there is no other processing to be performed at step S110 (step S110: NO), the dummy high-priority processing is performed.

A negative determination may made at step S110 in case where, for example, the idle processing is underway, and any one of the high-priority processing, the middle-priority processing and the low-priority processing is determined not to meet the situation (the time zone for executing the idle processing in Fig. 3). Further, an arrangement may be so made that such a negative determination is also made in case where, for example, the middle-priority processing or the low-priority processing is underway, but no program for control is executed, i.e. a standby mode.

If it is determined, by way of step S130, that the high-priority processing should be performed at step S110, the execution time is reduced in executing the high-priority processing (step S120). This is because the high-priority processing program has been stored in advance in the instruction cache memory 14 owing to the dummy high-priority processing at step S130.

On the other hand, even if it is determined, by way of step S130, that the middle-priority processing or the low-priority processing should be performed, for example, for execution of the middle-priority processing or the low-priority processing, if a negative determination is made at step S110 when control has again returned thereto, the dummy high-priority processing is performed. Therefore, in case the normal high-priority processing is performed afterwards, the execution time is expected to be reduced.

As described above, according to the microcomputer 2 of the present embodiment, the dummy high-priority processing is performed with the timing earlier than the normal timing. Thus, at the time of performing the dummy high-priority processing, the high-priority processing program is stored in the instruction cache memory 14. Thus, the CPU core 12 can read out the high-priority processing program from the instruction cache memory 14 with the normal timing. Therefore, the execution time can be reduced when performing the high-priority processing with the normal timing.

Since the entire region in the instruction cache memory 14 is left open, the execution time for the middle-priority processing or the low-priority processing may not become long. This owes to the fact that the large program data amount can be stored in the instruction cache memory 14. In case a loop process having a plurality of patterns is carried out in performing the middle-priority processing program or the low-priority processing program, the hit rate is expected to be increased because more pieces of program for the loop process can be stored in the instruction cache memory 14. If an interruption occurs during the execution of the middle-priority processing or the low-priority processing, for example, it may be that, in resuming the middle-priority program or the low-priority program thereafter, there is a high probability that the middle-priority processing program or the low-priority processing program has been stored in the instruction cache memory 14.

As described above, the A/D conversion values obtained through the high-priority processing with the normal timing are stored in the storage region 32 in the RAM 30. In the present embodiment, the A/D conversion values obtained through the dummy high-priority processing performed with the timing other than the normal timing (hereinafter referred as "dummy A/D conversion values") are adapted to be stored in the storage region 38 in the RAM 30. In case such dummy A/D conversion values are used in other processings (e.g., the middle-priority processing) in this type of microcomputer, it is likely that appropriate process may not be performed, or expected results may not be attained. Therefore, it is required to provide an arrangement, so that the dummy A/D conversion values may not be used. In the present embodiment, it is so arranged that the data stored in the storage region 38 may not be used.

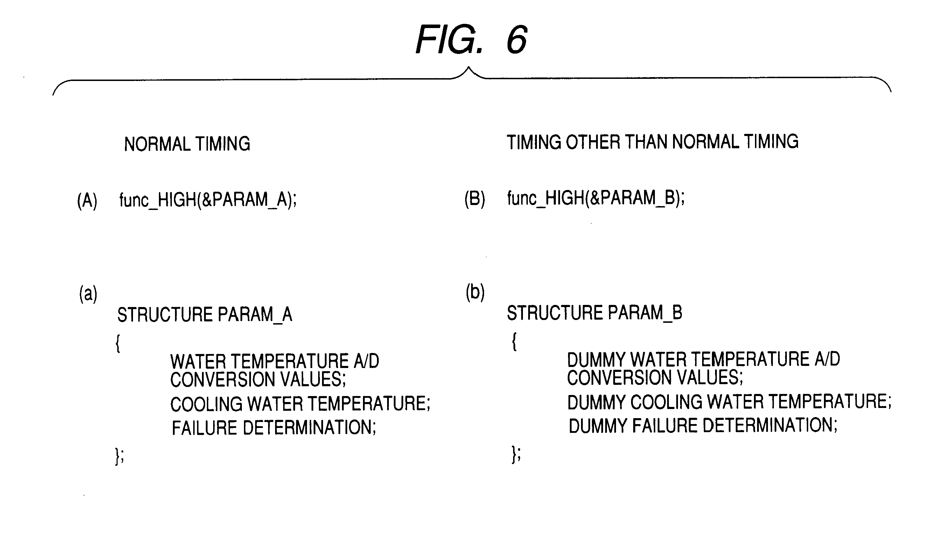

Fig. 6 shows one example of a piece of the high-priority processing program, which is for defining the A/D conversion values (i.e. for making a definition as "normal" or "dummy"). It should be noted that an explanation herein is provided about the A/D conversion values for the signals from the water temperature sensor 3.

In the high-priority processing with the normal timing, the pieces of program indicated by (A) and (a) are read out from the ROM 20 (or from the instruction cache memory 14). In this case, the A/D conversion values calculated through the high-priority processing are dealt with as "water temperature A/D conversion values" (i.e. as the normal A/D conversion values) as described in the upper line in the curly brackets at (a). Thus, the A/D conversion values are stored in the storage region 32, which is the normal storage region.

Contrarily, in the dummy high-priority processing with the timing other than the normal timing, the pieces of program indicated by (B) and (b) are read out from the ROM 20 (or from the instruction cache memory 14). In this case, the A/D conversion values calculated through the dummy high-priority processing are dealt with as "dummy water temperature A/D conversion values" as described in the upper line in the curly brackets at (b). Thus, the A/D conversion values calculated through the dummy high-priority processing are stored in the storage region 38 as dummy water temperature A/D conversion values. Which pieces of program (A), (a) or (B), (b) are read out is determined by the timing of the reading (i.e. by whether the process is the normal high-priority processing or the dummy high-priority processing).

In the program shown in Fig. 6, descriptions are also provided on the data of cooling water temperature calculated through the middle-priority processing and the data of failure determination calculated through the low-priority processing. Therefore, if an arrangement is made such that the dummy middle-priority processing is carried out for the middle-priority processing, and the dummy low-priority processing is carried out for the low-priority processing, the normal data is ensured to be stored in the normal storage regions (storage regions 34, 36) and the dummy data is ensured to be stored in the storage region 38, for example.

The storage region for the dummy A/D conversion values of the dummy high-priority processing, for example, may be set in the ROM 20. In Fig. 1, the storage region 29 in the ROM 20 is the storage region for the dummy A/D conversion values. In this case, a program indicating the storage region 29 as being a storage region for the dummy A/D conversion values may be stored in the ROM 20, so that the program may be read out by the CPU core 12. In transferring the dummy A/D conversion values to the storage region 29, the writing of the dummy A/D conversion values is ignored because the ROM 20 originally is incapable of writing.

In this way, the dummy A/D conversion values can never be used in other processings, and accordingly, no such problems are caused as not properly performing processings or not obtaining expected results. The storage region 29 may only be provided as a virtual region having no storage capacity, by which the memory resource can be saved.

It should be appreciated that, in the present embodiment, the processing at step S130 of Fig. 4 corresponds to the dummy execution control means, the storage region 32 corresponds to the true value storage portion, and the processing in which the CPU core 12 operates according to the program shown in Fig. 6 for storage of the A/D conversion values in the storage region 32 or the storage region 38, corresponds to the storage control means.

### [Second Embodiment]

Hereinafter is described an embodiment which uses the microcomputer of the present invention.

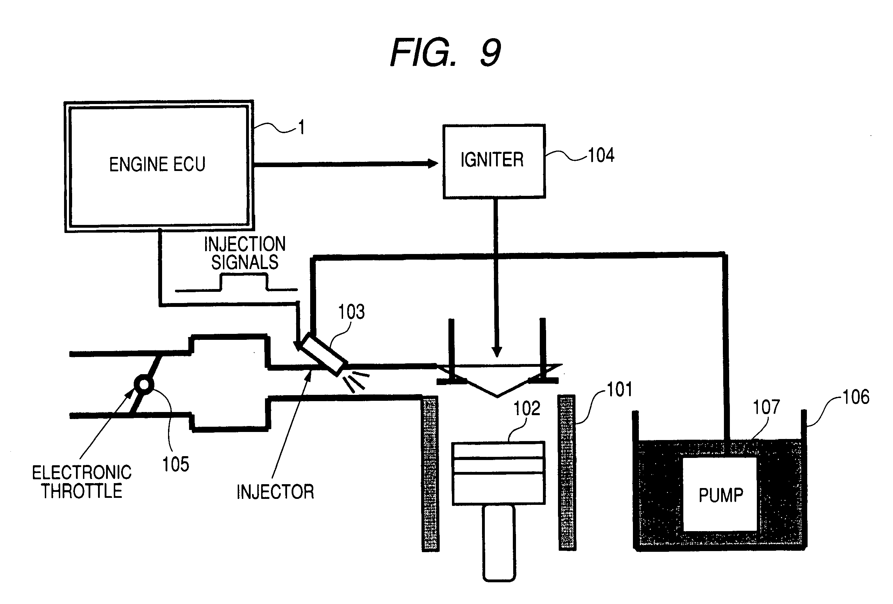

Fig. 9 is a block diagram showing an engine control system as a second embodiment. This engine control system, which is for controlling a 4-cylinder 4-cycle engine, controls an engine by allowing the engine ECU1 for controlling the engine to activate an injector 103 and an igniter 104 provided to each of the cylinders. It should be noted that only one cylinder is indicated in Fig. 9. The configuration of the engine ECU 1 is basically the same as that of the ECU 1 shown in Fig. 1. As mentioned above, the identical or similar components are given the same references for simplification of the explanation.

Driving strokes of the 4-cycle engine consist of air intake stroke, compression stroke, combustion stroke and discharge stroke.

In the air intake stroke, a piston 102 in a cylinder 101 is lifted down to supply the air-fuel mixture into the cylinder 101. In particular, fuel in a fuel tank 106 is supplied to the injector 103 through a pump 107, while the engine ECU 1 simultaneously outputs injection signals (indicative, for example, of an active level as being high) for opening a valve of the injector 103. While the injection signals are at an active level, the valve of the injector 103 is opened to inject fuel. Further, air is supplied with the opening of an electronic throttle valve 105. The opening of the throttle valve is controlled based on the manipulated variable of the accelerator given by a driver, for example.

After the air-fuel mixture has been supplied into the cylinder 101, the piston 102 is lifted up to compress the air-fuel mixture in the cylinder 101 (compression stroke). In the state of the air-fuel mixture being compressed, the engine ECU 1 outputs ignition signals, with predetermined timing, for activating the igniter 104. Then, the igniter 104 applies high voltage to an ignition plug to ignite the air-fuel mixture so that the air-fuel mixture is combusted (exploded) (combustion stroke). The piston 102 is then activated by this action.

Thereafter, when the piston 102 is lifted up, combustion gas resulting from combustion is discharged (discharge stroke).

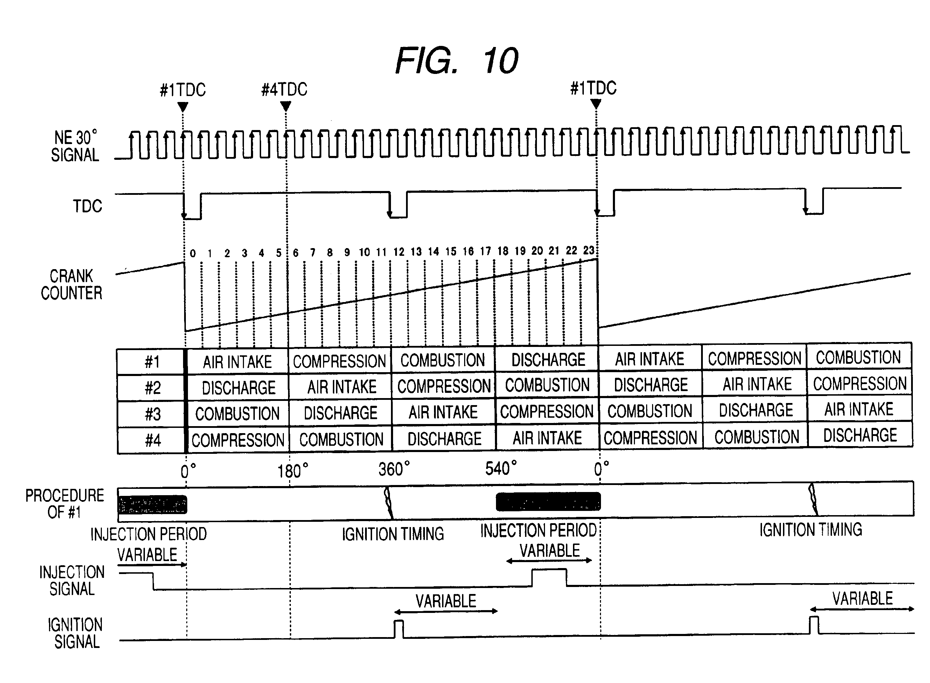

Fig. 10 is a timing diagram showing one example of engine control.

In Fig. 10, "NE 30° signal" in the first part of the figure is produced in the engine ECU 1 based on a pulse which is inputted from a known crank sensor (not shown) at every 10° rotation, for example, of a crankshaft. The NE 30° signal is a pulse signal in which a period for the crankshaft to rotate 30° is rendered to be one cycle. Various processings are ensured to start with the rising timing or the falling timing of the NE 30° signal. A pulse interval is stored in the RAM 30, for example.

"TDC" in the second part of the figure is a signal produced in the engine ECU 1, which changes in the order of low→high→low every time the piston 102 is positioned at an uppermost level (top dead center (TDC)).

The engine ECU 1 is provided with a crank counter (not shown). As shown in the third part of the figure, the crank counter counts up from "0" to "23" while the crankshaft rotates twice (0° to 720°). In other words, the crank counter counts up "1" at a time every 30° rotation of the crankshaft. Thus, by referring to the value of the crank counter, the rotation angle of the crankshaft (multiple values of 30° within the range of 0° to 720°) can be confirmed.

The fourth part of the figure shows one example of a flow of the individual strokes (air intake, compression, combustion and discharge) in the first (#1) cylinder to the fourth (#4) cylinder.

The fifth to the seventh parts of the figure show examples of the fuel combustion control and the ignition control in the first cylinder, in particular, among the four cylinders. The fuel combustion timing and the fuel combustion period, or the ignition timing and the ignition period are variable and are controlled according to various conditions.

Processing performed by the CPU 10 in the engine ECU 1 is now described below. The CPU 10 performs the high-priority processing, the middle-priority processing, the low-priority processing and the idle processing.

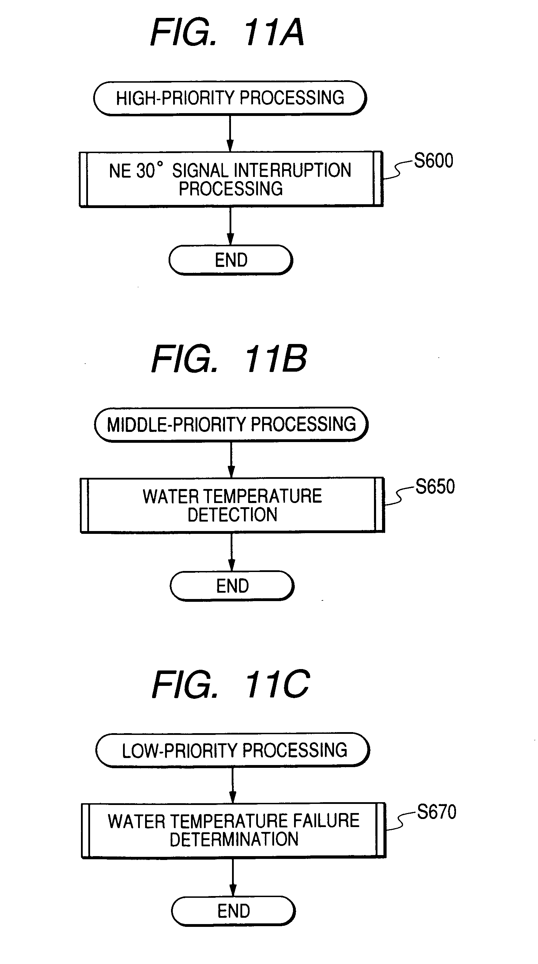

Figs. 11A to 11C show flow diagrams for the high-, middle-, and low-priority processings, respectively. Among them, the high-priority processing is carried out every 30° rotation of the crankshaft, or in particular, carried out every falling timing of the NE 30° signal. The middle- and low-priority processings are performed with predetermined timing depending on an engine speed, for example. The idle processing is the same as the one shown in Fig. 5D.

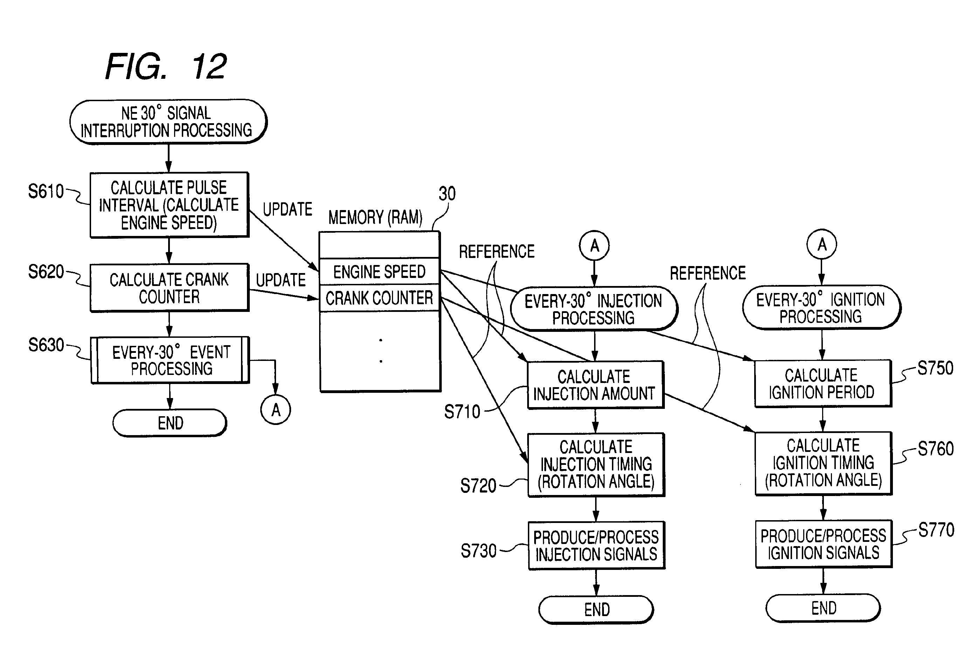

As shown in Figs. 11A to 11C, in the high-priority processing, the CPU 10 carries out interruption processing at step S600 for the NE 30° signals, as will be described later (Fig. 12). At step S650 in the middle-priority processing, the CPU 10 carries out processing for calculating the cooling water temperature of the engine based on the signals from the water temperature sensor 3. At step S670 in the low-priority processing, the CPU 10 carries out processing for determining the occurrence of malfunction (failure) of the water temperature sensor 3.

Referring now to Fig. 12, hereinafter are described the contents of the interruption processing for the NE 30° signals. It should be noted that detailed description on the middle- and low-priority processings is omitted here.

In the interruption processing for the NE 30° signals, an engine speed is calculated first at step S610 by calculating a pulse interval (e.g., the latest pulse interval) of the NE 30° signals. The calculated engine speed data is stored for update in the predetermined storage region in the RAM 30.

Control then proceeds to step S620 where a count value of the crank counter (refer to the third part of Fig. 10) is read out. The read out counter value is stored for update in the predetermined storage region in the RAM 30.

Control then proceeds to step S630 where every-30° event processing that should be carried out every 30° rotation of the crankshaft is carried out. The processing of interest is eventually completed.

As shown in Fig. 12, injection processing or ignition processing is carried out, for example, as the every-30° event processing.

In the injection processing, an amount of fuel to be injected (hereinafter referred to as an "amount of fuel consumption") is calculated, at step S710, based on various data, such as an engine speed and a cooling water temperature.

Then, at step S720, a fuel injection timing (the rotation angle of the crankshaft) is calculated based on various data, such as an engine speed and a cooling water temperature, similar to the above, or the amount of fuel consumption calculated at step S710.

At step S730, processing for producing the injection signals is performed. In particular, the fuel injection timing (time) calculated at step S720 and the fuel injection time (period) corresponding to the amount of fuel consumption calculated at step S710, are set in a timer for outputting the injection signals. Then, from the point of fuel injection timing onward set in the timer, the level of the injection signals becomes high during the set fuel injection period to thereby perform fuel injection.

In the ignition processing, an ignition period (period for supplying current to the ignition plug) is calculated, at step S750, based on various data, such as an engine speed and a cooling water temperature.

Control then proceeds to step S760 where ignition timing (rotation angle of the crankshaft) is calculated based on various data, such as an engine speed and a cooling water temperature, similar to the above, or the ignition period calculated at step S750.

At step S770, processing for producing the ignition signals is carried out. In particular, the ignition timing (time) calculated at step S760 and the ignition period calculated at step S750 are set in a timer for outputting the ignition signals. Then, from the point of ignition timing onward set in the timer, the level of the ignition signals becomes high during the set injection period to thereby perform ignition.

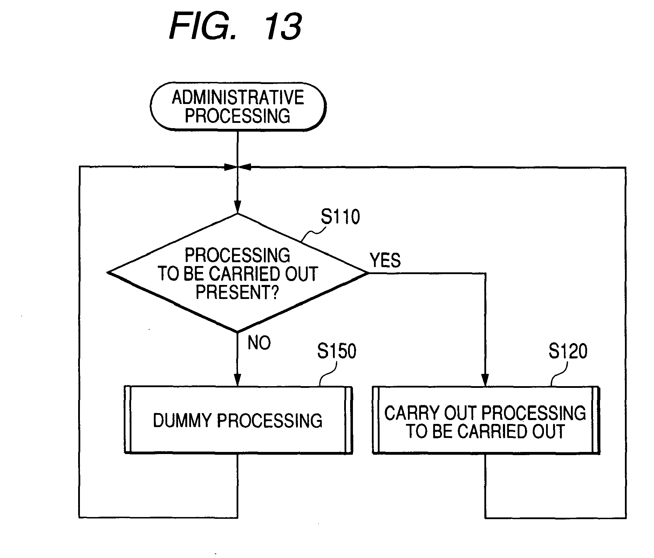

The CPU 10 executes administrative processing of Fig. 13. The administrative processing of Fig. 13 is different from that of Fig. 4 in that dummy processing is performed at step S150 instead of the dummy high-priority processing at step S130. At the dummy processing step S150, dummy processing of a part (first half) of the middle-priority processing is carried out in addition to the high-priority processing (NE 30° signal interruption processing). Other processings are the same as in Fig. 4. For example, if there is other processing to be carried out (step S110: YES) during the execution of the dummy processing (step S150), the processing to be carried out is carried out (step S120).

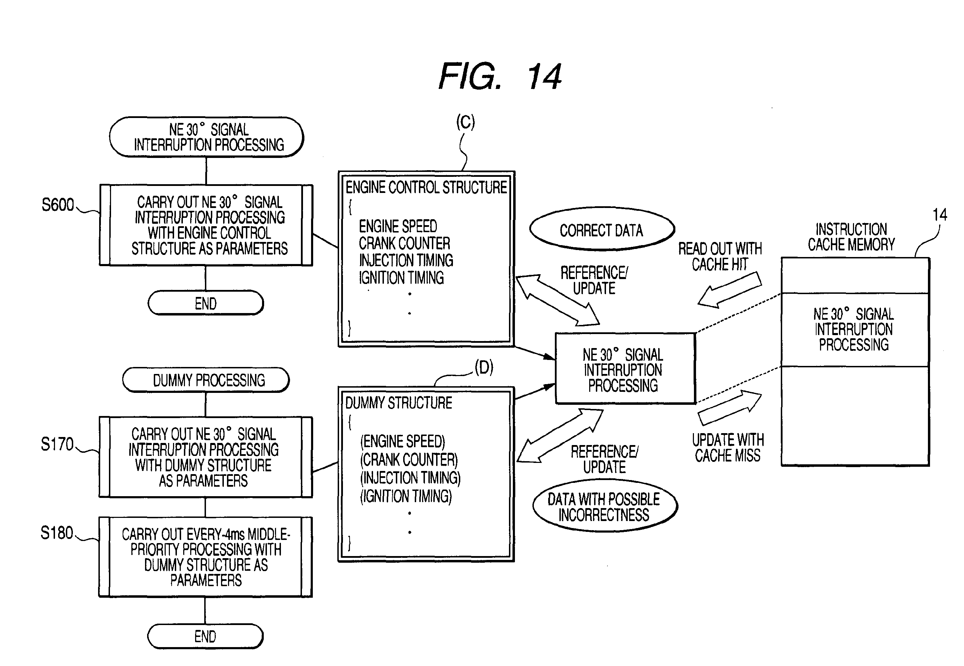

With reference to Fig. 14, the processing carried out at step S150 is described below in comparison with the normal processing.

In Fig. 14, processing in the upper part of the figure is the high-priority processing (NE 30° signal interruption processing) which is carried out with the normal timing. In the normal NE 30° signal interruption processing, an engine control structure shown by (C) is read out as parameters, from the ROM 20 or the instruction cache memory 14. This engine control structure forms a part of the program of the NE 30° signal interruption processing and is stored in advance in the ROM 20.

The engine control structure contains members (element data), such as an engine speed, crank counter, injection time and ignition time. The CPU 10 is adapted to read out / write in the element data in the injection processing or the ignition processing described above.

In Fig. 14, processing in the lower part of the figure is an example of the dummy processing carried out at step S150 of Fig. 13.

In the dummy processing, dummy NE 30° signal interruption processing is carried out at step S170. In particular, a dummy structure shown by (D) is read out as parameters, from the ROM 20 or the instruction cache memory 14. This dummy structure is also stored in advance in the ROM 20. Since other matters are the same as in the normal processing described above, the description is omitted.

The data contained in the dummy structure are not normal data and thus are not necessarily correct. The dummy structure is accessed only when the dummy processing is carried out and no access is made when the normal processing is carried out. Accordingly, the data calculated in the dummy execution are never used in the normal engine control.

Subsequently, dummy execution of the middle-priority processing is performed at step S180. In this case as well, reading/writing is carried out for the dummy structure shown by (D), with the dummy structure as the parameters. At step S180, in particular, it is so arranged that the middle-priority processing is divided into a first half and a second half to divide the capacity of the program making up the middle-priority processing into halves, and that the first half is subjected to the dummy execution.

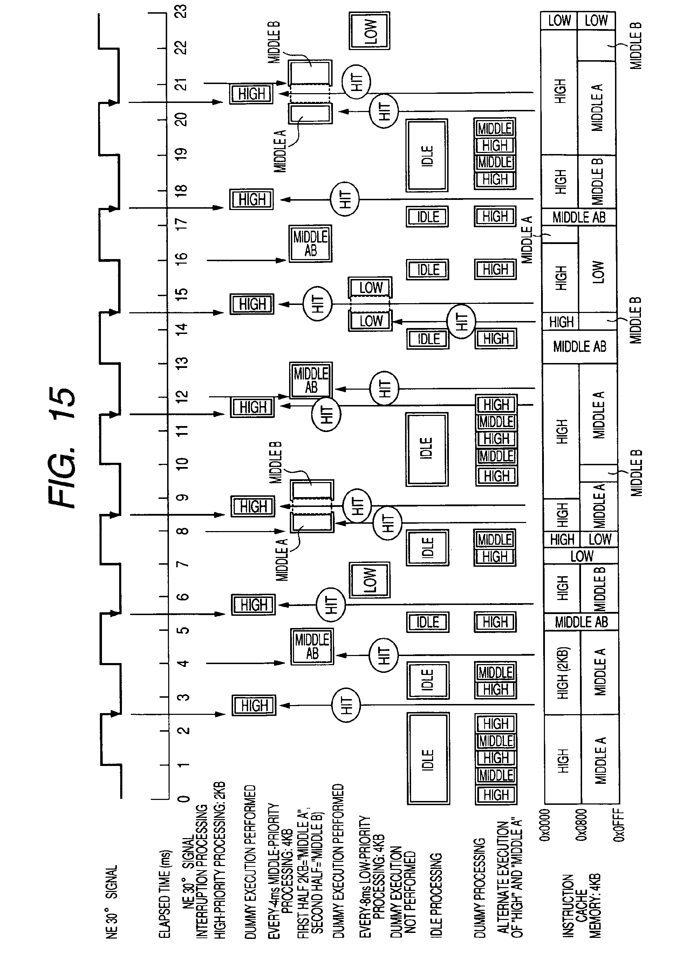

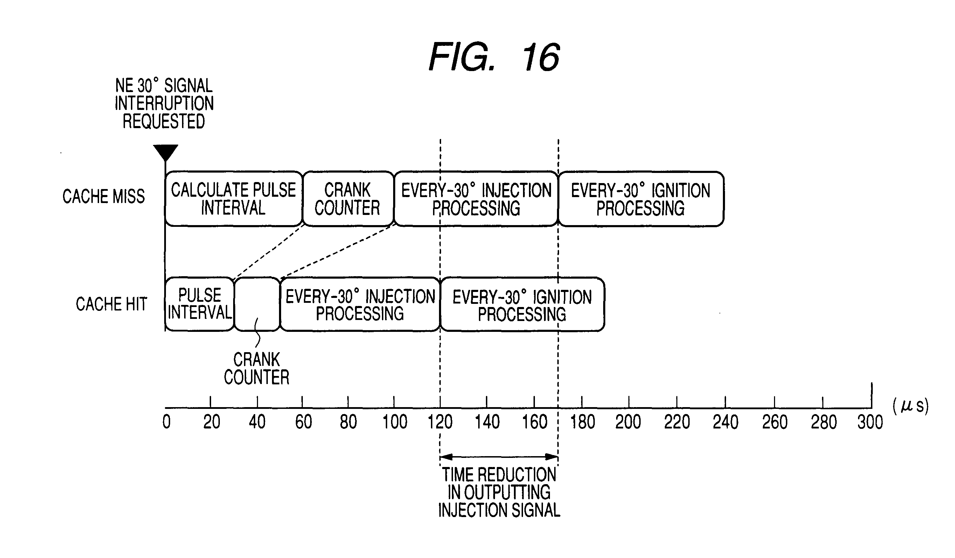

Referring now to Figs. 15 and 16, an operation of the second embodiment is described. It should be appreciated that the engine speed here is constant. One cycle of the NE 30° signals is set at 3.0 msec. In other words, an arrangement is made such that the high-priority processing (NE 30° signal interruption processing) is performed every 3.0 msec.

In the example shown in Fig. 15, the middle-priority processing is performed every 4.0 msec, and the low-priority processing is performed every 8 msec. The capacity of the middle-priority processing program is 4 KB, that of the low-priority processing program is 8 KB, and that of the instruction cache memory 14 is 14 KB.

In Fig. 15, the idle processing is performed with the timing of "0" msec.

As described above, the NE 30° signal interruption processing (high-priority processing) is performed at every falling of the NE 30° signal. In this example, the first high-priority processing is performed with the timing 2.5 msec.

The first middle-priority processing is performed with 4.0 msec timing, and the first low-priority processing is performed with 6.0 msec timing.

In case the timing of higher priority processing has come during the execution of the middle-priority processing or the low-priority processing, the currently executed processing is interrupted, so that the higher priority processing can be executed (step S110: YES and step S120 of Fig. 13). For example, in Fig. 15, during the second execution of the middle-priority processing with 8.0 msec timing, the execution timing of the high-priority processing (8.5 msec) comes. In this case, the middle-priority processing is interrupted and the high-priority processing is executed. After completing the high-priority processing, the middle-priority processing that has been interrupted is resumed. The same applies to the low-priority processing at the timing 14.0 msec.

During the execution of the idle processing, the dummy processing of Fig. 14 is performed. In particular, the dummy processing is performed for the NE 30° signal interruption processing and the first half of the middle-priority processing. Hereinafter, the first half of the middle-priority processing program is referred to as a "middle-priority processing program A" and the second half thereof is referred to as a "middle-priority processing program B".

When the dummy processing is carried out during 0-2.5 msec, for example, 50% of the instruction cache memory 14 is occupied by the high-priority processing program and the remaining 50% is occupied by the middle-priority processing program A.

In this case, the CPU 10 can read out the high-priority processing program from the instruction cache memory 14 (cache hit) in performing the normal high-priority processing program with the timing 2.5 msec.

Further, after the idle processing of 3.0-4.0 msec, the CPU 10 can read out the middle-priority processing program A from the instruction cache memory 14 in performing the normal middle-priority processing with timing 4.0 msec. As to the middle-priority processing program B, it is not stored in the instruction cache memory 14 and has to be read out from the ROM 20 (cache miss). However, since the instruction cache memory 14 is fully open, the middle-priority program B is also stored in the instruction cache memory 14. Thus, the hit rate gradually increases thereafter. After executing the middle-priority processing, the instruction cache memory 14 is occupied by the middle-priority processing programs A and B.

After the middle-priority processing has been completed at 5.0 msec, during the idle processing before the execution of the high-priority processing at 5.5 msec, the dummy processing is performed. Thus, the high-priority processing program is again stored in the instruction cache memory 14. In the dummy processing performed during the idle processing of 5.0-5.5 msec, the high-priority processing timing comes soon after completing the processing at step S170, without performing the processing at step S180. Thus, the high-priority processing program replaces the middle-priority processing program A which is older than the middle-priority processing program B, and is stored for upload.

In performing the low-priority processing at 6.0 msec, the CPU 10 reads out the low-priority processing program from the ROM 20 because the low-priority processing program is not stored in the instruction cache memory 14 (cache miss). However, owing to the fully open instruction cache memory 14, the hit-rate gradually increases.

Since the same applies to the processings with other timings, the explanation is omitted.

With reference to Fig. 16, an explanation is provided on the difference in the processing time between the case of cache miss and the case of cache hit. The explanation here is the case of the high-priority processing (the NE 30° signal interruption processing).

As shown in Fig. 16, in case of cache miss, 60 µs are required for calculating the pulse interval (step S610 of Fig. 12), and 40 µs are required for calculating the count value of the crank counter (step S620 of Fig. 12). Control is then transferred to the every-30° event processing (step S630 of Fig. 12).

On the other hand, in case of cache hit, 30 µs are required for calculating the pulse impulse and 20 µs required for calculating the count value of the crank counter.

Thus, in case of cache hit, the processings of steps S610 and S620 are completed a total of 50 µs earlier comparing with the case of cache miss. Therefore, transfer from the injection processing to the ignition processing can be smoothly done. This can prevent the fuel injection or ignition from taking place later than the desired timing.

As described above, the execution of the dummy processing shown in Fig. 14 during the idle processing may allow the high-priority processing program or the middle-priority processing program A to be stored in the instruction cache memory 14. As far as the programs stored in the instruction cache memory 14 are concerned, the CPU can obtain them by making an access to the instruction cache memory 14 without the necessity of accessing to the ROM 20. In this way, when programs are executed with normal timings in the state where the programs subjected to the dummy processing are stored in the instruction cache memory 14, the processing time with the normal timings can be shortened. Although the programs other than the high-priority processing program and the middle-priority processing program A are not subjected to the dummy processing, since the entire region of the instruction cache memory 14 can be used with the normal execution timings, the execution time can be prevented from becoming long.

It should be appreciated that, in the second embodiment, the dummy processing at step S150 of Fig. 13 corresponds to the dummy execution control means.

### <Modification>

A modification of the second embodiment is described below.

In this modification, it is so arranged that the contents of the dummy processing are changed according to the engine speed.

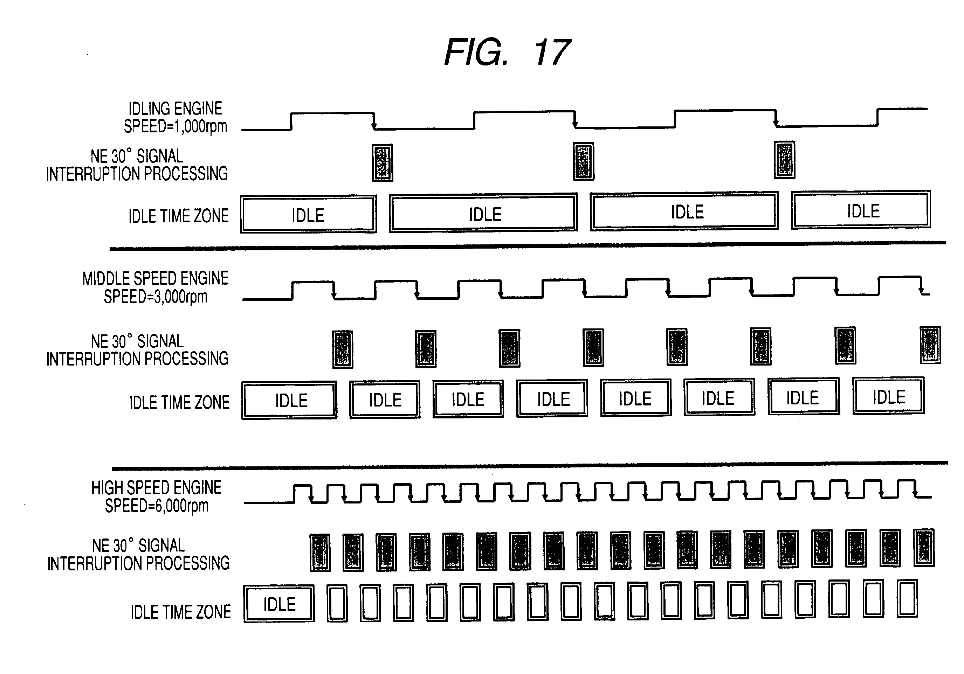

As shown in Fig. 17, idle time zones for performing the idle processing are altered according to the engine speed. Specifically, it may be that, in this modification, the contents of the dummy processing are changed according to the alteration of the idle time zones.

Detailed description on Fig. 17 is given below.

As shown in the upper part of the figure, in the state where the engine speed is low (e.g., 1000 rpm), such as the time of idling, one cycle of the NE 30° signals becomes longer. This elongates the interval between the execution timings for the high-priority processing. Although the middle-priority processing and the low-priority processing are not shown in Fig. 17, the interval between the execution timings of each of these processings also becomes longer. In this case, the time for each of the idle processings becomes longer.

As shown in the middle part of Fig. 17, in the state where the engine speed is at middle level (e.g., 3000 rpm), one cycle of the NE 30° signals becomes shorter comparing with the case of low speed. Therefore, the interval between the execution timings for the high-priority processing also becomes shorter comparing with the case of low speed, and so does the time for each of the idle processings.

As shown in the lower part of Fig. 17, in the state where the engine speed is high (e.g., 6000 rpm), one cycle of the NE 30° signals becomes much shorter, and the interval between the timings for the high-priority processing also becomes shorter, and so does the time for each of the idle processings.

As the time of each of the idle processings becomes shorter, processing that can be performed in each of the idle processings is more limited.

Under the circumstances, the CPU 10 changes the contents of the dummy processing at step S150 according to the engine speed, i.e. according to the length of time of the idle processing. It should be appreciated that the present modification is provided on the assumption that the high-, the middle- and the low-priority processing programs are simultaneously stored in the instruction cache memory 14.

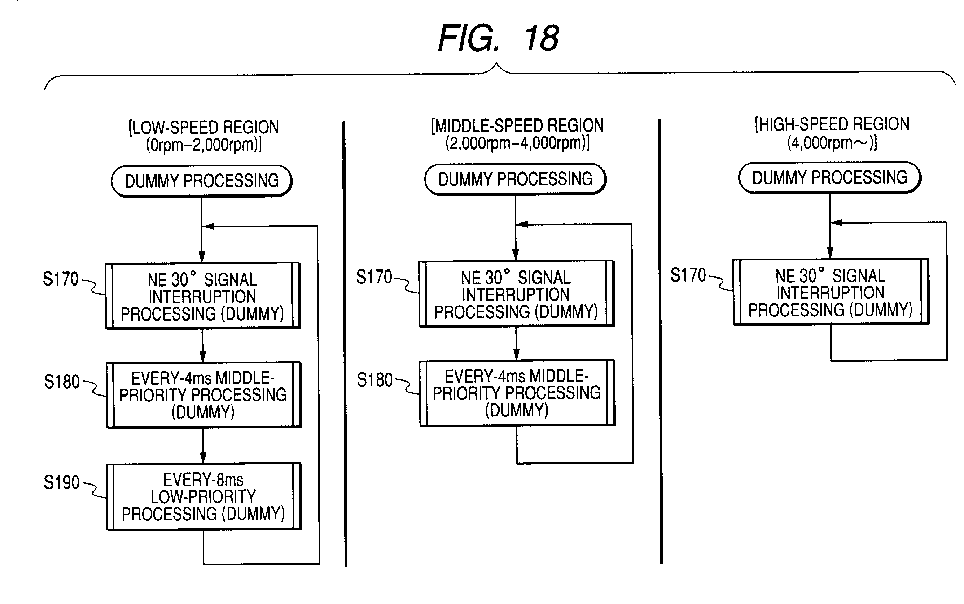

As shown in Fig. 18, in the dummy processing in the low-speed region, the CPU 10 carries out the dummy high-priority processing at step S170, the dummy middle-priority processing at step S180 and the dummy low-priority processing at step S190, for completion of the dummy processing.

In the dummy processing in the middle-speed region, the dummy high-priority processing is performed at step S170, and the dummy middle-priority processing is performed at step S180, for completion of the dummy processing.

In the dummy processing in the high-speed region, the dummy high-priority processing is performed at step S170, for completion of the dummy processing.

In this way, where the engine speed is increased to limit the time for the dummy processing, the high-priority processing having higher priority is ensured to be subjected to the dummy processing, so that the time for the normal high-priority processing can be reduced. If ample time is left in the dummy processing, the CPU 10 may allow the middle-priority processing or the low-priority processing to be performed, so that the time for performing each of the high-, middle- and low-priority processings with the normal timing may be reduced.

As described above, according to the present modification, the processing time can be efficiently reduced.

For example, at step S190 of the dummy processing in the low-speed region, only a first half of the low-priority processing may be performed. Alternatively, at step S170 of the dummy processing in the high-speed region, only a first half of the high-priority processing may be performed.

### [Third Embodiment]

Hereinafter is described a third embodiment of the microcomputer of the present invention.

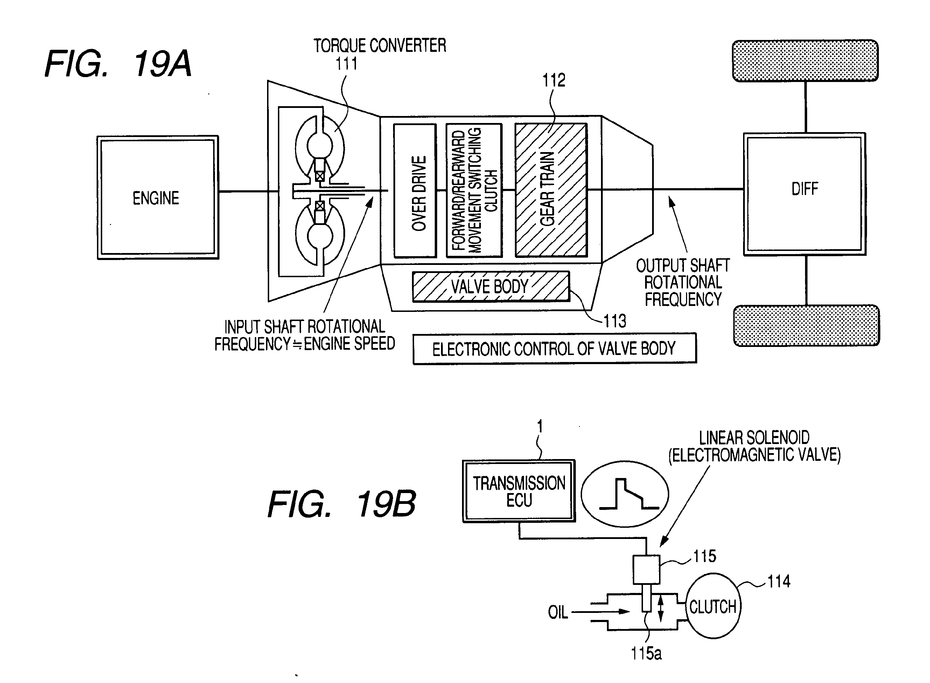

Figs. 19A and 19B are block diagrams showing an automatic transmission control system as the third embodiment. It should be appreciated that the automatic transmission is a transmission provided between an engine and a differential gear unit.

As shown in Fig. 19A, the automatic transmission control system is principally made up of a torque converter 111 for transmitting power from the engine to a shaft of the transmission using a flow of oil, a gear train 112 for converting a gear ratio of gears for transmitting the rotation from the torque converter 111 to an output shaft, and a valve body 113 for activating the gear train 112.

The gear train 112 is provided with a plurality of gears, a clutch and a brake, for example. With the activation of the clutch and the brake, some actions are taken. For example, power transmission of the gears is controlled, forward movement and rearward movement are switched, and an overdrive (gear for minimum gear ratio) is switched.

The valve body 113 controls an oil pressure for activating a clutch 114 (see Fig. 19B) and the brake (not shown), for example, of the gear train 112 by opening/closing a hydraulic circuit, a passage of oil. As shown in Fig. 19B, for example, the valve body 113 is provided with a linear solenoid 115 which is activated by the instructions from a transmission ECU 1 for opening/closing the hydraulic path. The oil pressure can be controlled at high speed and with accuracy by the activation of the linear solenoid (activation of a plunger 116), so that high-speed and smooth gear change can be achieved. For the transmission ECU 1 in the following description, the same components as in the ECU 1 are referred to by the same references.

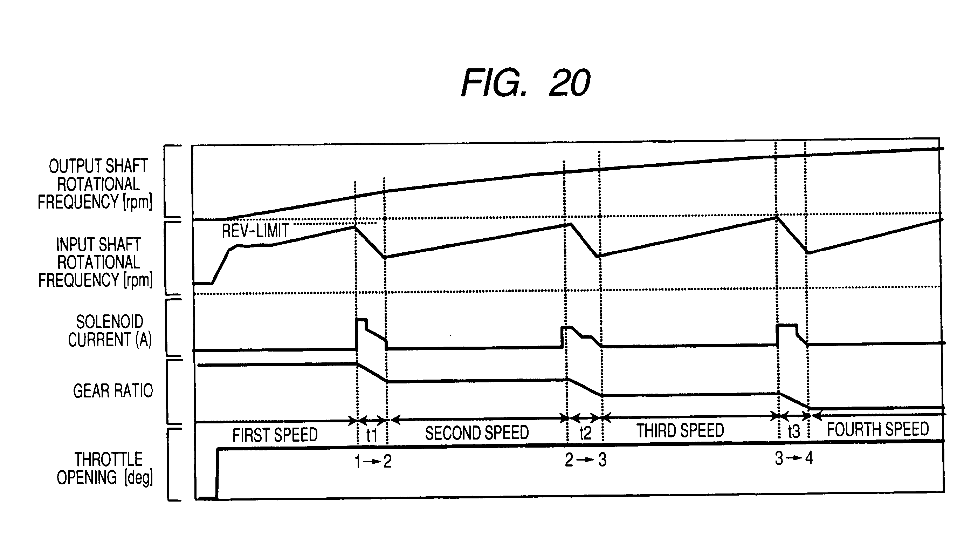

Fig. 20 is a timing diagram showing automatic transmission control. Hereinafter, the shaft between the torque converter 111 and the gear train 112 is referred to as an "input shaft", and the shaft between the gear train 112 and the differential gear unit is referred to as an "output shaft".

Fig. 20 shows an example in which opening of a throttle valve (see the fifth part of Fig. 20) of an electronic throttle (see Fig. 9, for example) is fully open for acceleration, and the gear is changed in the order of: first speed → second speed → third speed → fourth speed (see the fourth part of Fig. 20).

In the first speed state, an input shaft rotational frequency (the second part of Fig. 20) gradually increases as the engine speed increases. An output shaft rotational frequency (the first part of Fig. 20) also increases gradually. It should be appreciated that the degree of increase in the output shaft rotational frequency is based on the gear ratio.

When the input shaft rotational frequency (i.e., engine speed) comes close to a rev-limit rotational frequency (maximum rotational frequency), the valve body 113 is automatically controlled to change the gear ratio in the gear train 112, thereby obtaining the second speed (changing the gear). In this case, the output shaft rotational frequency smoothly increases, while the input shaft rotational frequency decreases to a predetermined rotational frequency. The same is applicable to the subsequent processings.

The third part of Fig. 20 shows change of current (solenoid current) supplied to the linear solenoid 115 to activate the linear solenoid 115 itself. The degree of projection of the plunger 116 in the linear solenoid 115 can be adjusted by varying the value of current supplied to the linear solenoid 115.

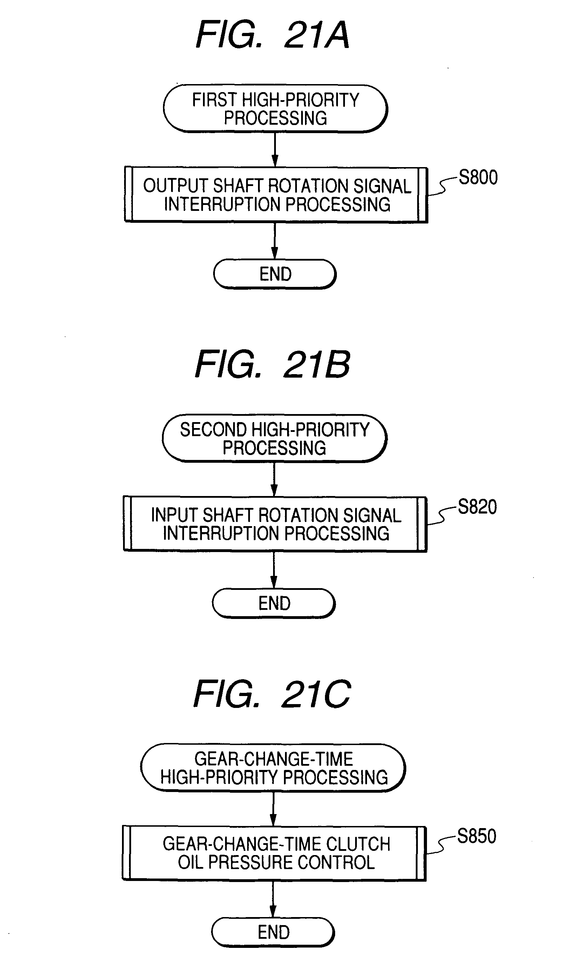

Figs. 21A to 21C are flow diagrams showing the processings executed by the CPU 10 in the transmission ECU 1 in the automatic transmission control system. In the present third embodiment, the CPU 10 performs the high-, middle- and low-priority processings and the idle processing. Among them, the high-priority processing includes three types of high-priority processings as shown in Figs. 21A to 21C. That is, a first high-priority processing shown in Fig. 21A, a second high-priority processing shown in Fig. 21B and a gear-change-time high-priority processing shown in Fig. 21C. The middle- and low-priority processings are the same as the ones shown in Fig. 11B and Fig. 11C, respectively. The idle processing is the same as the one shown in Fig. 5D.

The automatic transmission control system of the present embodiment is provided with an output shaft rotation sensor which detects rotation of the output shaft and outputs a pulse every time the output shaft is rotated by a predetermined angle, and an input shaft rotation sensor which detects rotation of the input shaft and outputs a pulse every time the input shaft is rotated by a predetermined angle.

The first high-priority processing starts with the rising timing and the falling timing of a pulse signal outputted from the output shaft rotation sensor (hereinafter referred to as an "output shaft rotation signal"). The second high-priority processing starts with the rising timing and the falling timing of the pulse signal outputted from the input shaft rotation sensor (hereinafter referred to as a "input shaft rotation signal"). Gear-change-time high-priority processing is a processing repeatedly performed when gear is changed (t1, t2 and t3 of Fig. 20) and when neither of the first and the second high-priority processings is performed.

In the first high-priority processing, output shaft rotation signal interruption processing, which will be described later, is performed at step S800. In the second high-priority processing, input shaft rotation signal interruption processing, which will be described later, is performed at step S820. In the gear-change-time high-priority processing, gear-change-time clutch oil pressure control, which will be described later, is performed.

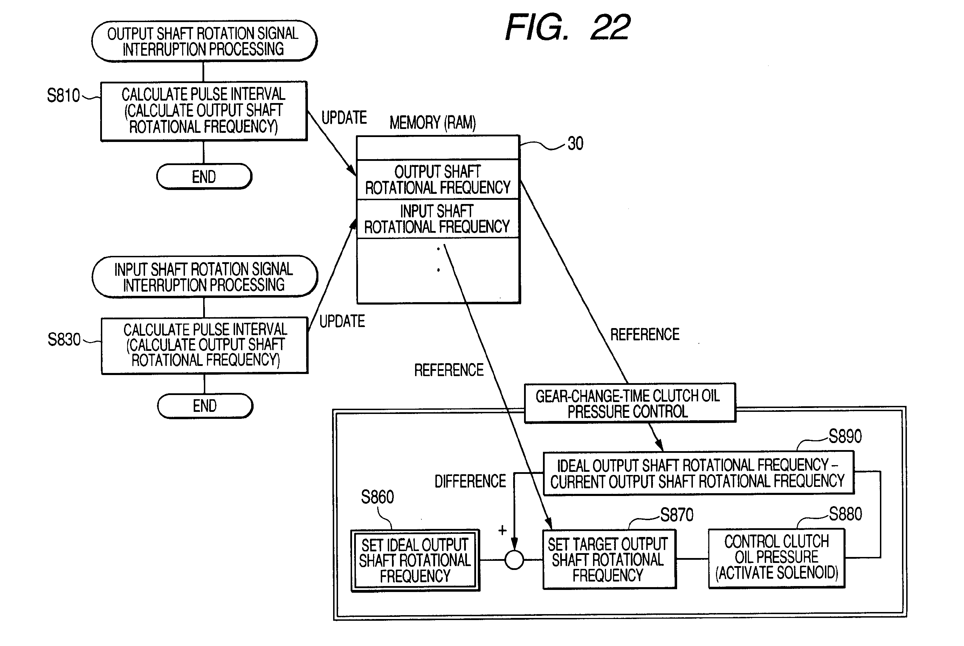

Fig. 22 shows the contents of the input shaft rotation signal interruption processing, the output shaft rotation signal interruption processing, and the gear-change-time clutch oil pressure control.

In the output shaft rotation signal interruption processing, a pulse interval (e.g., the latest pulse interval) of the output shaft rotation signals and the output shaft rotational frequency are calculated at step S810. The calculated output shaft rotational frequency is stored in a predetermined storage region in the RAM 30. Thereafter, the processing of interest is terminated.

In the input shaft rotation signal interruption processing, a pulse interval (e.g., the latest pulse interval) of the input shaft rotation signals and the input shaft rotational frequency are calculated at step S830. The calculated input shaft rotational frequency is stored in a predetermined storage region in the RAM 30. Thereafter, the processing of interest is terminated.

The gear-change-time clutch oil pressure control is a feedback control for allowing the output shaft rotational frequency to be an ideal rotational frequency (hereinafter referred to as an "F/B control"). The details are provided below.

An ideal output shaft rotational frequency is set first (step S860). The ideal rotational frequency is calculated based on the engine speed and driving conditions, for example.

Then, a target rotational frequency is set, so that the current output shaft rotational frequency (the output shaft rotational frequency stored in the RAM 30 at step S810) is rendered to be the ideal rotational frequency set at step S860 (step S870).

Subsequently, oil pressure control for activating the clutch is performed, so that the output shaft rotational frequency turns to the target rotational frequency set at step S870 (step S880). In particular, the linear solenoid 115 (see Fig. 19) is activated.

Then, a difference between the ideal rotational frequency and the current output shaft rotational frequency (the rotational frequency stored in the RAM 30) is calculated (step S890). It should be appreciated that the output shaft rotational frequency in the RAM 30 has been updated to a real-time value. The calculated difference is referred to when calculating the target rotational frequency.

When the gear is changed, the gear-change-time clutch oil pressure control is performed to smoothly increase/decrease the output shaft rotational frequency. This suppresses the occurrences of gear change shock.

The first, the second and the gear-change-time high-priority processings are administered through the administrative processing shown in Fig. 13. In other words, the CPU 10 of the third embodiment administers the high-, middle- and low-priority processings and the idle processing through the administrative processing shown in Fig. 13.

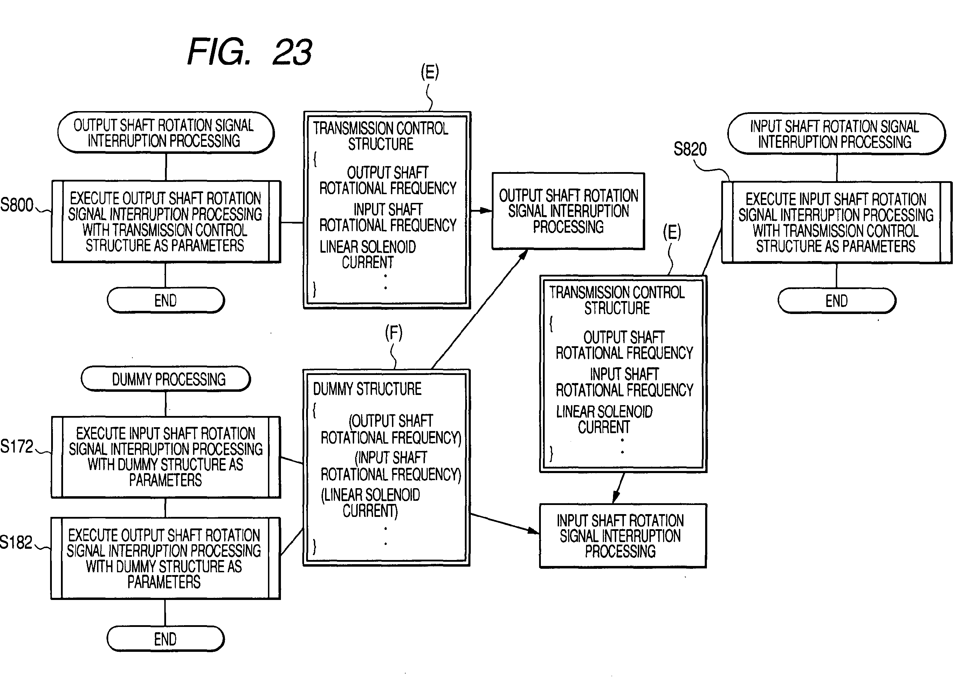

Fig. 23 shows one example of the dummy processing performed at step S150 in the administrative processing (Fig. 13). In the following, the dummy processing is explained in comparison with the normal processing.

As shown in Fig. 23, at step S800 for performing the output shaft rotation signal interruption processing with the normal timing, a transmission control structure shown by (E) is read out as parameters from the ROM 20 or the instruction cache memory 14. The transmission control structure constitutes a part of the program of each of the output shaft rotation signal interruption processing and the input shaft rotation signal interruption processing.

The transmission control structure contains members (element data), such as the output shaft rotational frequency, the input shaft rotational frequency, and linear solenoid current. The CPU 10 is adapted to read out / write in the element data in the output shaft rotation signal interruption processing. Since the same is applicable to the input shaft rotation signal interruption processing, the explanation is omitted here.

In the dummy processing, dummy execution is carried out, at step S172, for the input shaft rotation signal interruption processing. In particular, a dummy structure shown by (F) is read out as parameters from the ROM 20 or the instruction cache memory 14. Then, the input shaft rotation signal interruption processing is performed as at step S820, but here, the element data are read/written from/into the dummy structure. Further, a dummy execution is performed, at step S182, for the output shaft rotation signal interruption processing. In this case, the same output shaft rotation signal interruption processing is performed as at step S800, and the element data are read/written from/into the dummy structure as described above. It is so arranged that the dummy structure is accessed only when performing the dummy execution, and is not accessed when performing the normal processing.

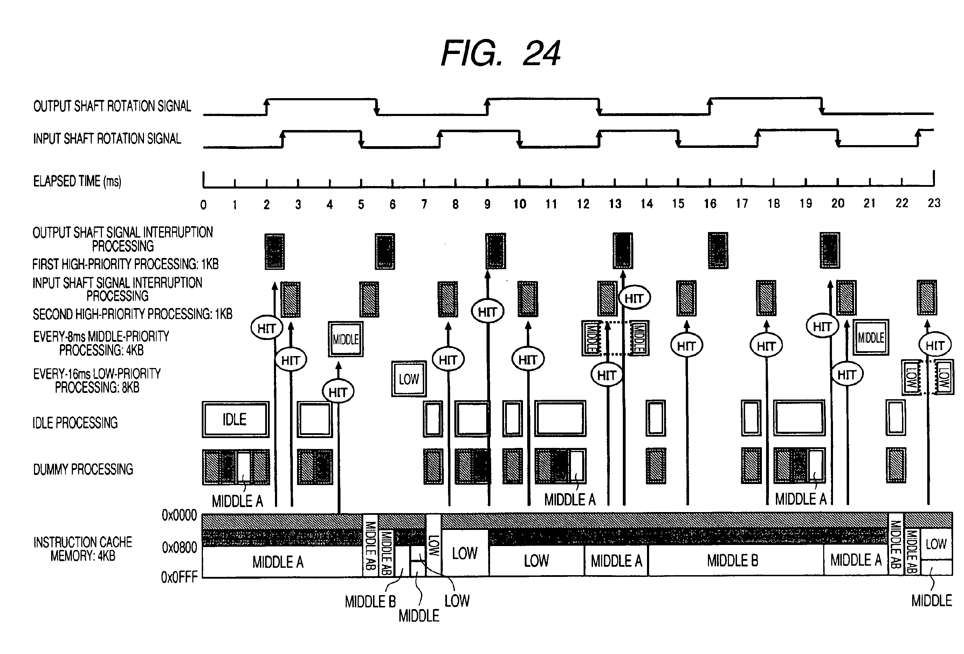

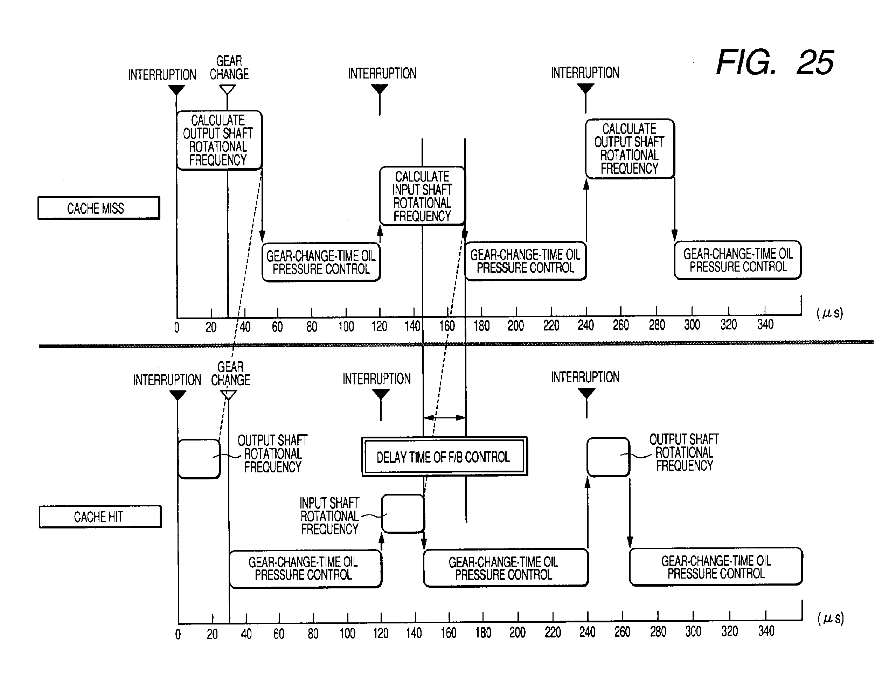

Referring now to Figs. 24 and 25, an operation of the third embodiment is described. It should be noted that the engine speed is to be constant, and the output shaft rotational frequency and the input shaft rotational frequency are to be also constant. In this example, one cycle of the output shaft rotation signals is 7.0 msec, in which each of a high period and a low period is 3.5 msec. One cycle of the input shaft rotation signals is 5.0 msec, in which each of a high period and a low period is 2.5 msec.

In the dummy processing performed during the idle processing, the first half of the middle-priority processing, as well as the output shaft rotation signal interruption processing (first high-priority processing) and the input shaft rotation signal interruption processing (second high-priority processing) is subjected to the dummy processing. In the first high-priority processing and the second high-priority processing, the latter has a higher priority, so that the dummy execution is performed in the order of: the second high-priority processing → the first high-priority processing → the middle-priority processing.

In Fig. 24, the idle processing is performed with "0" timing.

As mentioned above, the output shaft rotation signal interruption processing (first high-priority processing) is performed at every rising and falling of the output shaft rotation signal. In this example, the first processing is performed with the timing 2.0 msec.

As mentioned above, the input shaft rotation signal interruption processing (second high-priority processing), is performed at every rising and falling of the input shaft rotation signal. In this example, the first processing is performed with the timing 2.5 msec.

The middle-priority processing is performed for the first time with the timing 4.0 msec, and afterwards, basically, with the timing 8.0 msec. The low-priority processing is performed for the first time with the timing 6.0 msec, and afterwards, basically, with the timing 16.0 msec.

During the execution of the idle processing, the dummy processing is performed as described above. When all of the dummy processings is performed, 25% of the instruction cache memory 14 is occupied by the program of the output shaft rotation signal interruption processing (hereinafter referred as a "first high-priority processing program"), another 25% is occupied by the program of the input shaft rotation signal interruption processing (hereinafter referred as a "second high-priority processing program"), and the remaining 50% is occupied by the middle-priority processing program A.

In the idle processing of 0-2.0 msec, all the dummy processings are performed. Accordingly, when the normal first high-priority processing is performed with the timing 2.0 sec, the CPU 10 is enabled to read out the first high-priority processing program from the instruction cache memory 14 (cache hit). The same is applicable to the second high-priority processing with the timing 2.5 msec.

The idle processing of 3.0-4.0 msec is followed by the normal middle-priority processing with the timing 4.0 msec, in which the CPU 10 is enabled to read out the middle-priority processing program A from the instruction cache memory 14 (cache hit). Since the middle-priority processing program B has not been stored in the instruction cache memory 14, it has to be read out from the ROM 20 (cache miss). However, since the instruction cache memory 14 is fully open, the middle-priority processing program B is also stored in the instruction cache memory 14, and thus afterwards, the hit rate gradually increases. After the middle-priority program is performed, the instruction cache memory 14 is occupied by both of the middle-priority processing programs A and B.

The middle-priority processing is completed at 5.0 msec, which is followed by the second high-priority processing at 5.0 msec and the first high-priority processing at 5.5 msec, which programs are read from the ROM 20. In the low-priority processing at 6.0 msec, the program is also read from the ROM 20.

After completing the low-priority processing at 6.0 msec, the idle processing is performed in which the dummy processing is performed for the second high-priority processing. Thus, the second high-priority processing program is stored in the instruction cache memory 14. Therefore, in performing the second high-priority processing with the timing 7.5 msec, the second high-priority processing program can be read from the instruction cache memory 14 (cache hit).

During the idle processing of 8.0-9.0 msec, the second high-priority processing and the first high-priority processing are subjected to dummy execution, so that the second and first high-priority processing programs are stored in the instruction cache memory 14. Accordingly, in performing the first high-priority processing at 9.0 msec, the first high-priority processing program can be read from the instruction cache memory 14 (cache hit).

As described above, in case the execution times of a plurality of processings coincide with each other, a higher priority processing is performed as a priority (see step S110: YES and step S120 of Fig. 13). For example, with the timing 12.5 msec, the execution timing of the first high-priority processing coincides with the second high-priority processing, but the second high-priority processing is performed first. After completing the second high-priority processing, the first high-priority processing is performed.

Fig. 25 is a timing diagram showing the difference in the processing time between the case of cache miss and the case of cache hit..In this example, an explanation is provided on the assumption that the input shaft rotation signal interruption processing is carried out (interruption occurs) at 0 (zero) µs and 120 µs, the input shaft rotation signal interruption processing is carried out (interruption occurs) at 120 µs, and gear change starts at 30 µs.

First, the output shaft rotation signal interruption processing executed with the timing 0 (zero) µs is completed at 50 µs in case of cache miss (execution time is 50 µs), and completed at 25 µs in case of cache hit (execution time is 25 µs). The gear-change-time clutch oil pressure control (see Fig. 22), which is performed with the start of gear change (occurrence of gear change), is started at 50 µs, or after completion of the output shaft rotation signal interruption processing in case of cache miss. On the other hand, in case of cache hit, the output shaft rotation signal interruption processing has been completed before the occurrence of gear change, so that the gear-change-time clutch oil pressure control can be started with the occurrence of gear change.

When another interruption occurs at 120 µs, the gear-change-time clutch oil pressure control is temporarily stopped to perform the input shaft rotation signal interruption processing. The input shaft rotation signal interruption processing is completed at 170 µs in case of cache miss (execution time is 50 µs), and completed at 145 µs in case of cache hit (execution time is 25 µs). Therefore, the gear-change-time clutch oil pressure control is started at 170 µs in case of cache miss, and started at 145 µs in case of cache hit. The same is applicable to the subsequent processings, and thus the explanation is omitted.

As described above, the output shaft rotation signal interruption processing and the input shaft rotation signal interruption processing are performed at higher speed in case of cache hit. Accordingly, the gear-change-time clutch oil pressure control can be performed at earlier timing with longer execution time. Thus, the output shaft rotational frequency is ensured to turn to the ideal output shaft rotational frequency at higher speed. As a result, smooth gear change can be achieved without the occurrences of gear change shock.

It should be appreciated that, if the gear-change-time clutch oil pressure control is subjected to dummy execution, the gear-change-time clutch oil pressure control can be advantageously performed at higher speed.

### <Modification>

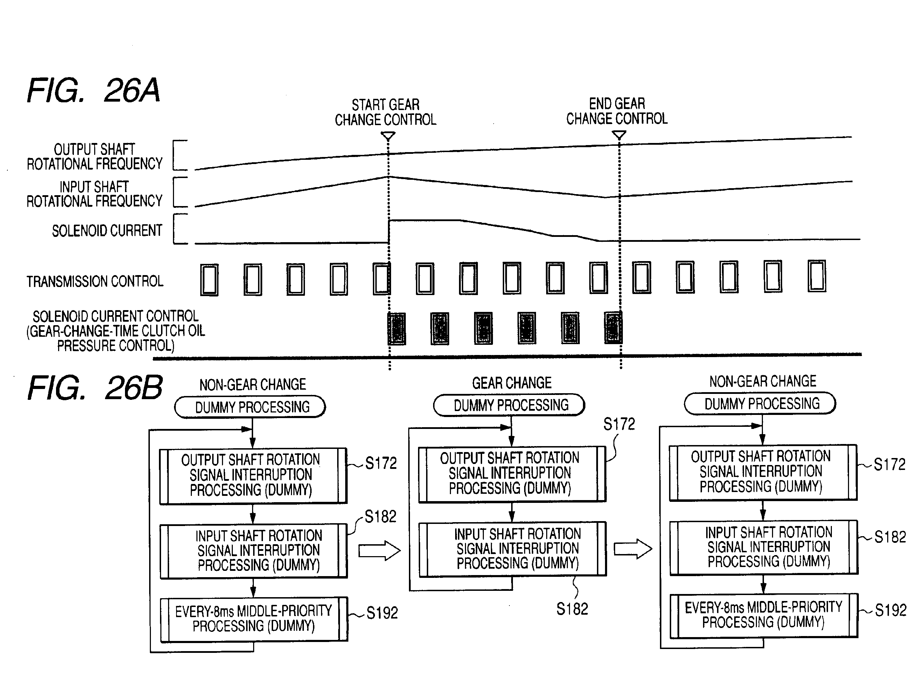

A modification of the third embodiment is described with reference to Figs. 26A and 26B. In the modification, contents of the dummy processing are changed depending on whether the processing takes place at gear-change control time or non-gear-change time. By the "gear-change control time" is meant the time from the point of starting gear change to the point of finishing the gear change (t1, t2 and t3 in Fig. 20). In the present modification, it is assumed that the high-, middle- and low-priority processing programs are simultaneously stored in the instruction cache memory 14.

Fig. 26A is a timing diagram showing one example of the automatic transmission control. In this timing diagram, the above output shaft rotation signal interruption processing or the input shaft rotation signal interruption processing is performed as the transmission control.

During the period other than the period from the point of starting gear change to the point of finishing gear change (non-gear-change time), transmission control is performed, for example. During the period from the point of starting gear change to the point of finishing gear change (gear-change control time), solenoid current control (the gear-change-time clutch oil pressure control mentioned above) is performed in addition to the transmission control.

The time of each idle processing becomes longer in the non-gear-change time than in the gear-change control time. Thus, as shown in Fig. 26B, in performing the dummy processing at non-gear-change time, the CPU 10 performs dummy execution of the output shaft rotation signal interruption processing at step S172, the input shaft rotation signal interruption processing at step S182, and the middle-priority processing at step S192.

In performing the dummy processing at gear-change control time, the output shaft rotation signal interruption processing is subjected to dummy execution at step S172, and the input shaft signal interruption processing is subjected to dummy execution at step S182.

In this regard, even though the idle processing time is shortened and thus the dummy processing time is limited, dummy execution is performed for the first and second high-priority processings having higher priority to reduce the time for the processing that takes place with the normal timing. If there is ample time left in the dummy processing, further dummy execution is performed for the middle-priority processing, so that the processing time of each of the first and second high-priority processing and the middle-priority processing can be reduced when it is performed with the normal timing.

As described above, according to the present modification, the processing time can be efficiently reduced.

It should be appreciated that only a first half of the middle-priority processing may be subjected to dummy execution, for example, at step S192 of the dummy processing at non-gear-change time. Alternatively, only a first half of the input shaft rotation signal interruption processing may be subjected to dummy execution at step S182 of the dummy processing at gear-change control time. Alternatively, step S172 and step S182 may be switched with each other. Further, the low-priority processing may be subjected to dummy execution.

### [Fourth Embodiment]

A fourth embodiment which uses the microcomputer of the present invention is described below.

In the fourth embodiment, the engine control or automatic transmission control as described above is performed using a real-time operating system (hereinafter referred to as "RTOS"). This RTOS is to carry out execution/administration of application programs.

In the RTOS, prior to executing an application program, preprocessing for executing the application program is executed. If the preprocessing is executed at high speed, the time up to the execution of the application program is reduced, and thus eventually, the processing time of the entire system can be reduced.

Accordingly, in the fourth embodiment, the preprocessing program (i.e., preparatory program) is stored in advance in the instruction cache memory 14 by executing the dummy processing. Thus, the execution time of the preprocessing that takes place with the normal timing can be reduced.

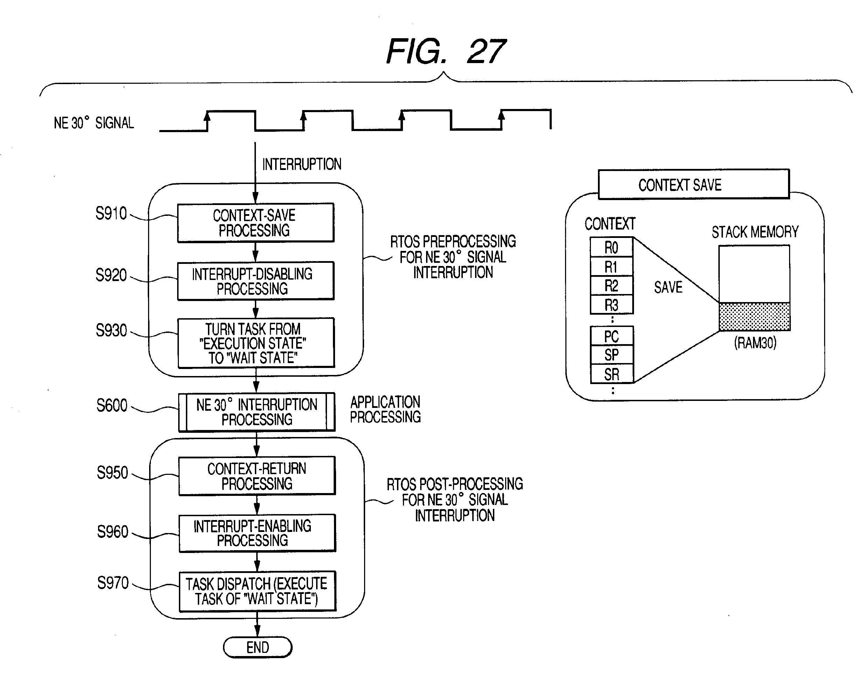

Fig. 27 shows the contents of the preprocessing executed in the RTOS. Fig. 27 also shows the contents of post-processing which is executed after performing the application program. The following explanation is made for the case where the RTOS is used in the engine control system as shown in Figs. 9 to 18.

In Fig. 27, it is assumed that the NE 30° signal has fallen and that the execution timing for the high-priority processing (the NE 30° signal interruption processing) has come (interruption has occurred). In this case, under the control of RTOS, the NE 30° signal interruption processing is performed after the execution of the preprocessing, which is followed by the execution of the post-processing.

In the preprocessing, context-save processing is performed first at step S910. In the context save processing, data stored in a register of the microcomputer 2 are stored (saved) in a predetermined storage region (stack memory) in the RAM 30 or the like. For example, as shown in upper right of Fig. 27, data in general purpose registers (R0, R1, R2, R3, etc.), a program counter (PC), a stack pointer (SP) and a status register (SR) are stored (saved) in the stack memory.

Then, control proceeds to step S920 where interrupt-disabling processing is performed. In particular, input of an interruption request for processings other than the processing currently underway (the NE 30° signal interruption processing) is inhibited.

Then, control proceeds to step S930 where the task currently underway is placed in a "wait state". In particular, a state variable indicating whether or not the task is in an execution state or in the wait state is rewritten into a data indicative of the wait state.

Steps S910 to S930 correspond to the preprocessing.

After completion of the preprocessing, the NE 30° signal interruption processing is performed, which is followed by the post-processing.

In the post-processing, context-return processing is performed first at step S950. In particular, the data that have been stored (saved) in the stack memory at step S910 are read out and stored in the individual registers. For example, the data of the general purpose registers, the program counter, the stack pointer and the status register are rewritten into data as read out from the stack memory.

Subsequently, interrupt-enabling processing is performed at step S960. In particular, inhibition for an input of an interruption request is released.

At step S970, the task that has been placed in the "wait state" at step S930 is placed in an "execution state". In other words, the task in the wait state is executed. Thereafter, the processing is terminated.

In case of executing the middle-priority processing, preprocessing and post-processing suitable for the middle-priority processing are performed. In case of executing the low-priority processing, preprocessing and post-processing suitable for the low-priority processing are performed.

In the present embodiment, the administrative processing of Fig. 13 is performed.

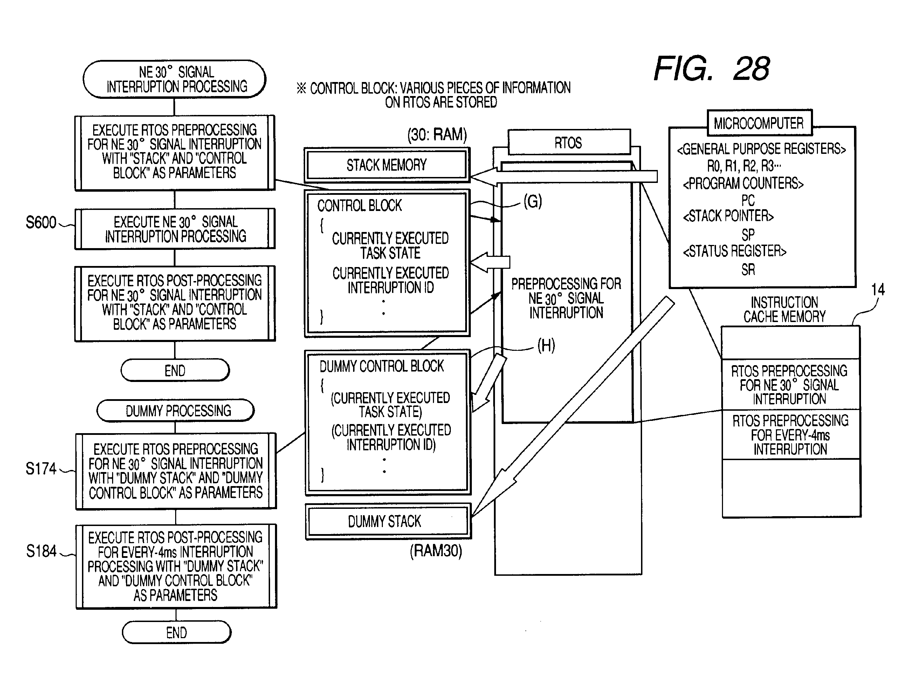

Fig. 28 shows one example of the dummy processing performed at step S150 of the administrative processing (Fig. 13). Contents of this dummy processing are explained in comparison with the normal processing (the NE 30° signal interruption processing).

In the normal processing, the preprocessing described above is performed with "stack" and "control block" as parameters. In this case, the control block indicated by (G) is read out. It should be appreciated that various pieces of information on the RTOS are stored in the control block. The information includes, for example, the state of task currently present (currently executed task state), and an ID for task for which interruption has been requested (currently executed interruption ID). Then, reading/writing of these pieces of information is carried out.

Access to the normal stack memory can be made with "stack" as a parameter.

Following the preprocessing, the NE 30° signal interruption processing is performed, which is followed by the post-processing to terminate the processing of interest.

In the dummy processing, dummy execution is performed for the preprocessing described above, with "dummy stack" and "dummy control block" as parameters. In this case, the dummy control block indicated by (H) is read out. It should be noted that, similar to the control block, various pieces of information on the RTOS are stored in the dummy control block. Then, reading/writing of these pieces of information is carried out for the dummy control block. It is so arranged that the dummy control block is not referred to in the normal processing.

Access to a dummy stack memory different from the normal stack memory can be made with "dummy stack" as an parameter.

Subsequently, similar to the above, dummy execution is performed for the preprocessing for the middle-priority processing, with "dummy stack" and "dummy control block" as the parameters. Thereafter, the processing of interest is terminated.

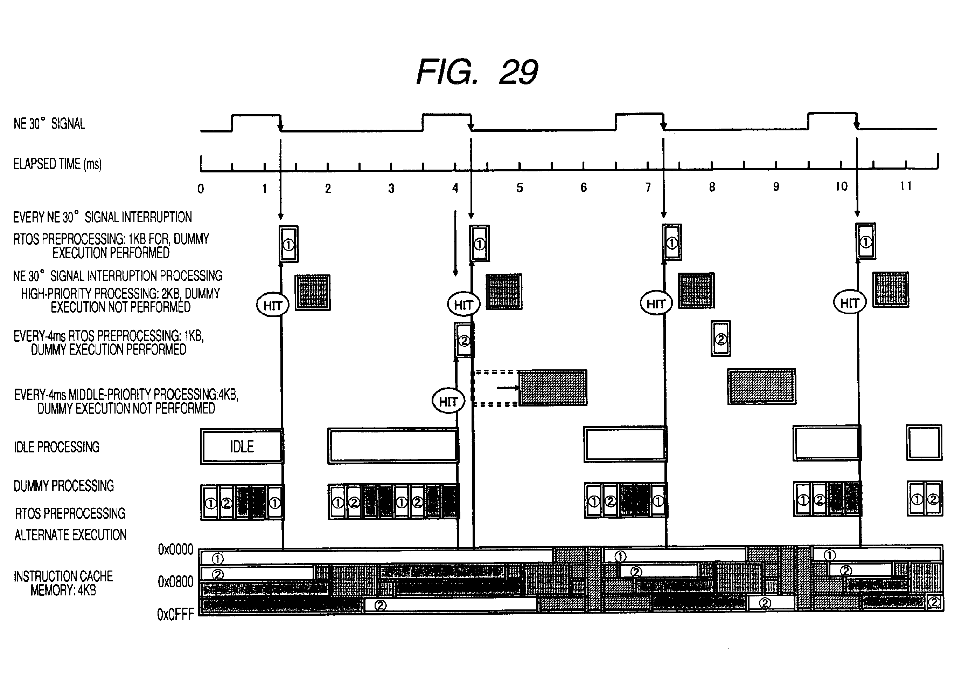

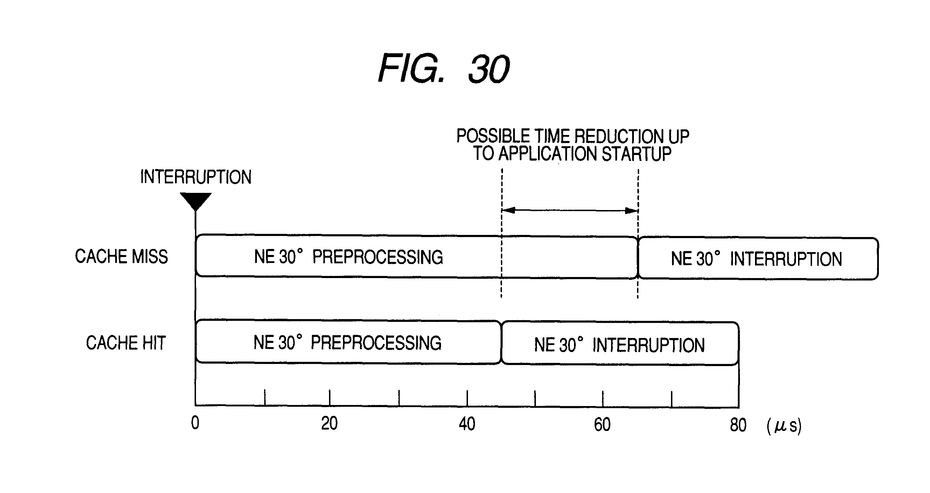

An operation of the present fourth embodiment is described with reference to Figs. 29 and 30. It should be noted that the engine speed here is constant. Further, one cycle of the NE 30° signals is 3.0 msec. Explanation on the middle-priority processing and the low-priority processing is omitted. In this example, in performing the dummy processing, two different pre-processings are executed in addition to the preprocessing for the high-priority processing (the NE 30° signal interruption processing) and the preprocessing for the middle-priority processing.

In Fig. 29, the idle processing is performed with the timing "0" msec.

The high-priority processing is to be started with the falling of the NE 30° signal at 1.25 msec which, however, is preceded by the preprocessing described above. In this case, dummy execution for the preprocessing of the high-priority processing is performed during the idle processing of 0-1.25 msec, and thus the program for the preprocessing of the high-priority processing is stored in the instruction cache memory 14. Therefore, in the normal preprocessing at 1.25 msec, the program can be read out from the instruction cache memory 14 (cache hit).

In this case, the preprocessing is executed at high speed for transfer to the high-priority processing (the NE 30° signal interruption processing) (1.5 msec).

When the high-priority processing is completed, 50% of the instruction cache memory 14 is to be occupied by the high-priority processing program. Thereafter, the dummy processing is again carried out during the idle processing. As a result, the instruction cache memory 14 is to be occupied by four types of preprocessing programs.

For example, the middle-priority processing is carried out at 4.0 msec. Since the preprocessing program of the middle-priority processing has been stored in the instruction cache memory 14 through the dummy processing performed during the idle processing of 2.0-4.0 msec, in performing the preprocessing at 4.0 msec, the program can be read out from the instruction cache memory 14 (cache hit). Further, the high-priority processing is to be carried out at 4.25 msec. Therefore, the middle-priority processing is temporarily stopped to start the high-priority processing.

In this case as well, since the preprocessing program for the high-priority processing has already been stored in the instruction cache memory 14, the program can be read out from the instruction cache memory 14 (cache hit). The high-priority processing is completed at 5.0 msec, when the middle-priority processing is resumed.

Fig. 30 shows difference in processing time between the case of cache miss and the case of cache hit when performing the preprocessing for the high-priority processing. As shown in Fig. 30, 65 µs is required in case of cache miss, and 45 µs is required in case of cache hit. That is, in case of cache hit, transfer to the high-priority processing takes place 20 µs earlier.

As described above, the preprocessing programs which are performed prior to the high-, middle- and low-priority processings are stored in the instruction cache memory 14, whereby the speed of the pre-processings increases. Consequently, processing speed of the entire system is enhanced.

Some embodiments of the present invention have been described above. The present invention is not limited to these embodiments but may be implemented in any embodiment within the technical scope of the present invention.

In the above embodiments, the description has been given taking a case of the microcomputer 2 equipped in the ECU 1 for instance. However, the present invention can be applied to any microcomputer having an instruction cache memory.

An instruction cache memory may be an external cache memory provided outside a CPU.

In the first embodiment of the present invention, execution/administration of programs has been performed by an OS, but where there is no OS, the following measure can be taken. Specifically, for the high-priority processing, the middle-priority processing and the low-priority processing, an arrangement may be made so that the higher the priority is, the sooner an interruption takes place for execution. Further, a program may be made in such a way that, in the repeatedly performed main processings, the dummy high-priority processing starts up during the idle processing (e.g., at the time of starting the idle processing) in which no particular control is performed for an object to be controlled. In this way, the same operation and the same effects as in the administrative processing of Fig. 4 may be obtained.

In the embodiments of the present invention, the programs are stored in the ROM 20, but they may be stored in the RAM 30.

The present invention may be embodied in several other forms without departing from the spirit thereof. The embodiments and modifications described so far are therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

## Claims

1. A microcomputer comprising:
a program memory in which a plurality of programs are stored;
an instruction cache memory in which the program read out from said program memory is stored for update;
a CPU (central processing unit); and
dummy execution control means for having said CPU executed at least one specified program from among said plurality of programs, with a timing earlier than a normal timing with which said CPU reads out said specified program for execution.

2. The microcomputer according to claim 1 wherein;
said plurality of programs are provided for controlling an object to be controlled;
said CPU is configured to control said object to be controlled by executing said plurality of programs; and
said dummy execution control means allows said CPU to execute said specified program within a time zone when said CPU does not control said object to be controlled.

3. The microcomputer according to claim 1 or 2 comprising;
a true value storage portion for storing results of calculation made by said CPU by executing a program with said normal timing; and
storage control means for transferring results of calculation to a specified storage portion other than said true value storage portion, said calculation being made by said CPU by allowing said dummy execution control means to give a command to said CPU to execute a program with a timing earlier than said normal timing.

4. The microcomputer according to claim 3, wherein said storage control means has a parameter for specifying an address to which a data is to be transferred.

5. The microcomputer claimed in claim 3 or 4, wherein said specified storage portion is a ROM.

6. The microcomputer according to any one of claims 1 to 5, wherein said program memory is a ROM.

7. The microcomputer according to any one of claims 1 to 5, wherein said program memory is a RAM.

8. The microcomputer according to any one of claims 1 to 7, wherein;
said microcomputer is loaded on a vehicle;
an engine control program for controlling an engine of said vehicle is stored in said program memory so as to serve as a program for controlling said vehicle (hereinafter referred to as a "vehicle control program"); and
said dummy execution control means is configured to allow said CPU to execute said engine control program with a timing earlier than said normal timing for executing said engine control program.

9. The microcomputer according to any one of claims 1 to 7 wherein;
said microcomputer is loaded on a vehicle;
a transmission control program for controlling a transmission of said vehicle is stored in said program memory so as to serve as a program for controlling said vehicle (hereinafter referred to as a "vehicle control program"); and
said dummy execution control means is configured to allow said CPU to execute said transmission control program with a timing earlier than said normal timing for executing said transmission control program.

10. The microcomputer according to claim 8 or 9, further comprising an operating system, said vehicle control program being an application program whose execution is controlled by said operating system, said operating system being configured to execute a program for a process of performing preparation for executing said vehicle control program, serving as a preparatory program, prior to executing said vehicle control program, wherein
said preparatory program is stored in said program memory; and
said dummy execution control means is configured to allow said CPU to execute said preparatory program with a timing earlier than said normal timing for executing said preparatory program.

11. The microcomputer according to claim 8 wherein,
said engine control program is provided in plural number; and
said dummy execution control means is configured to make a determination as to whether the number of revolutions of said engine is high or low, and to change a program, from among said plurality of engine control programs, which is executed by said CPU with a timing earlier than a normal timing, based on the results of said determination.

12. The microcomputer according to claim 9 wherein;
said transmission realizes speed change by shifting a gear, while said transmission control program is provided in plural number; and
said dummy execution control means is configured to change a program to be executed by said CPU with a timing earlier than a normal timing depending on a state of said gear, the state being under change or not under change.
